# EUROPEAN PATENT APPLICATION

(11) **EP 4 647 890 A1**
(43) Date of publication of application: **12.11.2025**
(21) Application number: 23920837.4
(22) Date of filing: 28.11.2023
(51) Int. Cl.: G06F 3/16

(54) **AUDIO PROCESSING METHOD AND ELECTRONIC DEVICE**

(30) Priority: 08.02.2023 CN 202310147258; 23.04.2023 CN 202310452155
(71) Applicant: Huawei Technologies Co., Ltd., Shenzhen, Guangdong 518129 (CN)
(72) Inventor: LU, Liangbing, Shenzhen, Guangdong 518129 (CN)
(74) Representative: Pfenning, Meinig & Partner mbB
(86) International application number: PCT/CN2023/134753
(87) International publication number: WO 2024/164646

(57) **Abstract**

Embodiments of this application provide an audio processing method and an electronic device, and relate to the field of electronic device technologies. The method may be applied to a second electronic device. The method includes: When a communication connection is established with a first electronic device, the second electronic device receives at least one piece of first audio information, where the first audio information is recorded after the first electronic device detects a first trigger operation. Then, the second electronic device may display a first window corresponding to an audio processing service, where the first window includes the at least one piece of first audio information. In addition, when displaying the first window on a target interface of at least one target application, the second electronic device detects an operation of dragging the first audio information to the target interface, and shares the first audio information to the at least one target application, without a need to rely on a designated application and cumbersome operations to record and process the audio information. This improves convenience of operation and thus improves user experience.

## Description

This application claims priorities to Chinese Patent Application No. 202310147258.3, filed with the China National Intellectual Property Administration on February 8, 2023, and entitled "APPARATUS FOR FAST VOICE INPUT AND PROCESSING OF WEARABLE AUDIO DEVICE AND INTERACTION METHOD", and to Chinese Patent Application No. 202310452155.8, filed with the China National Intellectual Property Administration on April 23, 2023, and entitled "AUDIO PROCESSING METHOD AND ELECTRONIC DEVICE", both of which are incorporated herein by reference in their entireties.

### TECHNICAL FIELD

This application relates to the field of electronic device technologies, and in particular, to an audio processing method and an electronic device.

### BACKGROUND

With rapid development of artificial intelligence technologies, people's pursuit of intelligent, functionally diversified, and humanized lifestyles is becoming increasingly high. Wearable devices are widely used as a main transmission tool for audio signals in electronic devices. When a communication connection is established between a wearable device and another electronic device, a user may perform recording by using the wearable device. For example, the user may perform call recording in a call process, or may record a music clip while listening to music.

Usually, for example, the wearable device is a wireless headset and the another electronic device is a mobile phone. The user needs to use a headset application, corresponding to the wireless headset, in the mobile phone to implement recording in the call process. Specifically, the user needs to start the headset application on the mobile phone and trigger a recording process in the headset application. Then, the wireless headset intercepts call data and sends the call data to the headset application, to implement recording in the call process.

When the user needs to perform recording frequently, the user needs to repeatedly start the headset application before each time of recording, and needs to keep the headset application running during recording. It can be learned that the user needs to perform cumbersome operations. This causes poor user experience.

### SUMMARY

Embodiments of this application provide an audio processing method and an electronic device, to resolve a problem that a user needs to perform cumbersome operations and relies on a specified application in an audio processing process.

To achieve the foregoing objectives, the following technical solutions are used in embodiments of this application.

According to a first aspect, an embodiment of this application provides an audio processing method, applied to a second electronic device. The method includes:
when a communication connection is established with a first electronic device, the second electronic device receives at least one piece of first audio information, where the first audio information is recorded after the first electronic device detects a first trigger operation; the second electronic device may display a first window corresponding to an audio processing service, where the first window includes the at least one piece of first audio information; and when displaying the first window on a target interface of at least one target application, the second electronic device detects an operation of dragging the first audio information to the target interface, and shares the first audio information to the at least one target application.

It can be learned that the second electronic device provided in this embodiment of this application may display, in the first window, the audio information recorded by the first electronic device, and when detecting the operation of dragging the first audio information to the target interface, may further share the audio information to the at least one target application. The at least one target application may invoke the first audio information. For example, a user may trigger a headset to record audio information, and then the audio information may be viewed and edited in a window of a mobile phone. In addition, the user may share the audio information in the window to another application.

In this embodiment of this application, the recorded audio information may be associated with each application, so that the recorded audio information can be used in each application. In addition, each application may invoke an audio processing service, and audio information in the audio processing service may be shared to each application. The user can quickly search for and edit the recorded audio information by using the audio processing service, without relying on a specified application and cumbersome operations to record and process the audio information. This improves interaction efficiency and operation convenience between the user and the electronic device, and thus improves user experience.

In an implementation of the first aspect, the target application may include a first application, and the first window may be a first floating window. When displaying the first window on the target interface of the at least one target application, in a process of detecting the operation of dragging the first audio information to the target interface, and sharing the first audio information to the at least one target application, the second electronic device detects a first operation on the first application, and displays a first interface. The first floating window is displayed on the first interface in a floating manner. Then, the second electronic device detects an operation of dragging the first audio information in the first floating window to the first interface, and shares the first audio information to the first application.

It can be learned that the first window provided in this embodiment of this application is the first floating window. The second electronic device detects the first operation on the first application, and displays the first interface, where the first floating window is displayed on the first interface in a floating manner. Then, the second electronic device detects the operation of dragging the first audio information in the first floating window to the first interface, and shares the first audio information to the first application. In this way, the user may view, on the first interface, the first window displayed in a floating manner and the first audio information in the first window. Then, the user may drag the first audio information in the first floating window to the first interface, to share the first audio information to the first application, without a need for the user to rely on a specified application and cumbersome operations to share the audio information. This improves efficiency of sharing the audio information and thus improves user experience.

In a feasible implementation of the first aspect, the method further includes:
the second electronic device detects a second operation on at least one target object on the first interface, and displays the target object in the first floating window, where the target object includes one or more of picture information, text information, and the first audio information; the second electronic device detects a third operation on a second application, and displays a second interface, where the first floating window is displayed on the second interface in a floating manner; and the second electronic device detects an operation of dragging the at least one target object in the first floating window to the second interface, and shares the target object to the second application.

It can be learned that the first interface includes the at least one target object. The target object includes one or more of the picture information, the text information, and the first audio information. The second electronic device may detect the second operation on the at least one target object on the first interface, and display the target object in the first floating window. Then, the second electronic device may display the second interface corresponding to the second application, and the first floating window is displayed on the second interface in a floating manner. In addition, the second electronic device detects the operation of dragging the at least one target object in the first floating window to the second interface, and shares the target object to the second application. In other words, the second electronic device may display the target object in the first application in the first floating window, and may further share all or a part of selected content in the first floating window to the second application.

In this embodiment of this application, not only the audio information recorded by the first electronic device can be shared to the first application, but also the picture information, the text information, and the audio information in the first application can be shared to the second application, to implement an information sharing process. This simplifies user operations between different applications and improves operation efficiency of the user.

In a feasible implementation of the first aspect, the method further includes:
the second electronic device detects a change processing operation on the first audio information in the first floating window, and changes the first audio information, where
the change processing operation includes a deletion operation on the first audio information, a transcribing operation on the first audio information, or an editing operation on a text corresponding to the first audio information;
the second electronic device displays the changed first audio information in the first floating window; and the second electronic device detects a synchronization operation on the changed first audio information, and synchronizes change processing information of the first audio information to the first electronic device.

It can be learned that, the second electronic device detects the change processing operation on the first audio information in the first floating window, changes the first audio information, and displays the changed first audio information in the first floating window. Then, the second electronic device detects the synchronization operation on the changed first audio information, and sends the change processing information of the first audio information to the first electronic device. To be specific, the user may perform change processing on the first audio information in the first floating window, for example, delete the first audio information, transcribe the first audio information, or edit a text corresponding to the first audio information. After the change, the changed first audio information is viewed. The user may further synchronize the changed first audio information. The second electronic device may synchronize the change processing information of the first audio information to the first electronic device, so that the first electronic device synchronizes the change processing information of the first audio information to another electronic device.

In this embodiment of this application, the audio information recorded by the first electronic device may be transferred between a plurality of electronic devices, and the change information corresponding to the audio information may also be transferred between the plurality of electronic devices. The change information corresponding to the audio information may be transferred and distributed by the first electronic device, without a need for the user to perform a repeated change operation on different electronic devices. This simplifies a user operation and improves operation efficiency and convenience of the user.

In a feasible implementation of the first aspect, the method further includes:
after detecting the synchronization operation on the changed first audio information, during association with a third electronic device, the second electronic device synchronizes the change processing information of the first audio information to the third electronic device, so that the third electronic device changes first audio information in an audio processing service based on the change processing information.

It can be learned that, during association with the third electronic device, the second electronic device may directly synchronize the change processing information of the first audio information to the third electronic device, so that the third electronic device changes the first audio information in the audio processing service based on the change processing information. In other words, during association with the third electronic device, the second electronic device may also directly synchronize the change processing information of the first audio information to the third electronic device in a manner of a hyper terminal, without a need for the user to perform a repeated change operation on different electronic devices. This improves user experience.

In an implementation of the first aspect, in a process of displaying the first window corresponding to the audio processing service, the second electronic device receives a first instruction sent by the first electronic device, where the first instruction instructs to store the first audio information in a storage area specified by the audio processing service; and after receiving the first instruction, displaying the first window corresponding to the audio processing service.

After receiving the at least one piece of first audio information, the second electronic device stores the at least one piece of first audio information in the storage area specified by the audio processing service.

It can be learned that, in this embodiment of this application, the second electronic device receives the first instruction sent by the first electronic device, and after receiving the first instruction, displays the first window corresponding to the audio processing service. Then, after receiving the at least one piece of first audio information, the second electronic device stores the at least one piece of first audio information in the storage area specified by the audio processing service, so that the first window in the second electronic device may display the first audio information. In this way, the user can process the recorded first audio information by using the audio processing service. This improves convenience of the user.

In an implementation of the first aspect, in a process of displaying, after receiving the first instruction, the first window corresponding to the audio processing service, the second electronic device displays, after receiving the first instruction, a first control corresponding to the audio processing service; and the second electronic device detects a fourth operation on the first control, and displays the first window corresponding to the audio processing service.

It can be learned that, in this embodiment of this application, after receiving the first instruction, the second electronic device displays the first control corresponding to the audio processing service. The first control may be a floating control. Then, the second electronic device detects an operation on the floating control, and displays the first window corresponding to the audio processing service. The user may perceive, by using the displayed floating control, that the second electronic device has activated the audio processing service, to process the recorded first audio information by using the audio processing service, without a need for the user to manually activate the audio processing service. This simplifies the entire audio processing process and improves user experience.

In a feasible implementation of the first aspect, the method further includes:
when a communication connection is not established with the first electronic device, if detecting that the communication connection is established with the first electronic device, the second electronic device receives a first synchronization instruction and second audio information that are sent by the first electronic device, where the second audio information is recorded after the first electronic device detects the first trigger operation; and
the first synchronization instruction instructs to store the second audio information in the storage area specified by the audio processing service; and
the second electronic device stores, according to the first synchronization instruction, the second audio information in the storage area specified by the audio processing service.

It can be learned that, in this embodiment of this application, when a communication connection is not established with the first electronic device, if detecting that the communication connection is established with the first electronic device, the second electronic device receives the first synchronization instruction and the second audio information that are sent by the first electronic device, and stores the second audio information in the storage area specified by the audio processing service. To be specific, when a communication connection is not established with the first electronic device, if detecting that the communication connection is established with the first electronic device, the second electronic device may store, in the storage area specified by the audio processing service, the second audio information recorded by the first electronic device, to avoid a case in which data is lost when the user does not establish a communication connection between the first electronic device and the second electronic device, without a need for the user to perform a synchronization operation on the audio information after the first electronic device establishes the communication connection to the second electronic device. This improves user experience.

In a feasible implementation of the first aspect, the method further includes:
after receiving the first synchronization instruction and the second audio information that are sent by the first electronic device, during association with the third electronic device, the second electronic device generates and sends a second synchronization instruction and the second audio information to the third electronic device according to the first synchronization instruction, where the second synchronization instruction instructs to store the second audio information in a storage area specified by the audio processing service in the third electronic device.

It can be learned that, in this embodiment of this application, during association with the third electronic device, the second electronic device may directly send the second synchronization instruction and the second audio information to the third electronic device, so that the third electronic device stores the second audio information in the storage area specified by the audio processing service in the third electronic device. In other words, during association with the third electronic device, the second electronic device may also directly synchronize the second audio information to the third electronic device in a manner of a hyper terminal, without a need for the user to perform a repeated synchronization operation on different electronic devices. This improves user experience.

In a feasible implementation of the first aspect, the method further includes:
before receiving the at least one piece of first audio information, the second electronic device sends first notification information to the first electronic device, where the first notification information indicates that the audio processing service is capable of storing the first audio information.

It can be learned that before receiving the at least one piece of first audio information, the second electronic device sends the first notification information to the first electronic device. It may be understood that the first notification information may indicate that the second electronic device has currently activated the audio processing service, and the audio processing service can store the first audio information, so that the first electronic device records the first audio information after receiving the first notification information. In this way, the user can perceive when to start the recording process. This improves user experience.

According to a second aspect, an embodiment of this application provides an audio processing method, applied to a first electronic device. The method includes:
when a communication connection is established with at least one target electronic device, the first electronic device detects a first trigger operation, and sends at least one piece of recorded first audio information to the target electronic device, so that the first audio information is displayed in a first window corresponding to an audio processing service, and the first audio information is shareable to at least one target application.

It can be learned that the first electronic device detects the first trigger operation, and sends the at least one piece of recorded first audio information to the target electronic device, so that the first audio information is displayed in the first window corresponding to the audio processing service, and the first audio information is shareable to the at least one target application. In this way, the user only needs to trigger a recording process on a side of the first electronic device, and then may intuitively view, in the first window, the first audio information recorded by the first electronic device, and share the first audio information, without relying on a specified application and cumbersome operations to record and process the audio information. This improves operation convenience and thus improves user experience.

In an implementation of the second aspect, the at least one target electronic device includes a second electronic device and a third electronic device; and the method further includes:
the first electronic device receives change processing information, sent by the second electronic device, of the first audio information; and the first electronic device sends a change synchronization instruction to the third electronic device based on the change processing information of the first audio information, so that the third electronic device changes first audio information in an audio processing service according to the change synchronization instruction.

It can be learned that the first electronic device may serve as a transfer and distribution station of the target electronic device. After the second electronic device sends the change processing information of the first audio information to the first electronic device, the first electronic device may send the change synchronization instruction to the third electronic device, so that the third electronic device changes the first audio information in the audio processing service according to the change synchronization instruction. In this way, the first electronic device may transfer and distribute the change processing information of the first audio information, so that the change processing information of the first audio information may be transferred between a plurality of electronic devices, without a need for the user to perform a repeated change operation on different electronic devices. This simplifies a user operation and improves operation efficiency and convenience of the user.

In a feasible implementation of the second aspect, the method further includes:
when a communication connection is not established with the target electronic device, the first electronic device detects the first trigger operation, and obtains second audio information; and the first electronic device detects that the communication connection is established with the target electronic device, and sends a first synchronization instruction and the recorded second audio information to the target electronic device, where the first synchronization instruction instructs the target electronic device to store the second audio information in a storage area specified by an audio processing service.

It can be learned that, when a communication connection is not established with the target electronic device, the first electronic device detects the first trigger operation, and may record the second audio information. Then, the first electronic device detects that the communication connection is established with the target electronic device, and sends the first synchronization instruction and the recorded second audio information to the target electronic device. The first electronic device may record and store the second audio information when the communication connection is not established with the target electronic device. After the communication connection is subsequently established with the target electronic device, the recorded second audio information is synchronized to the target electronic device, to avoid a case in which data is lost when the user does not establish a communication connection between the first electronic device and the second electronic device, without a need for the user to perform a synchronization operation on the audio information. This improves user experience.

In an implementation of the second aspect, in a process of sending the first synchronization instruction and the second audio information to the target electronic device, the first electronic device detects that a communication connection is established with a fourth electronic device, and when the target electronic device and the fourth electronic device are devices associated with each other, sends the first synchronization instruction and the second audio information to the target electronic device, so that the target electronic device synchronizes the second audio information to a storage area specified by an audio processing service in the fourth electronic device.

It can be learned that the first electronic device detects that the communication connection is established with the fourth electronic device. The target electronic device and the fourth electronic device are devices associated with each other. After the first electronic device sends the first synchronization instruction and the second audio information to the target electronic device, the fourth electronic device and the target electronic device may synchronize the second audio information in a manner of a hyper terminal, without a need for the user to perform a repeated synchronization operation on different electronic devices. This improves user experience.

In an implementation of the second aspect, after detecting the first trigger operation, the first electronic device sends a first instruction to the target electronic device, where the first instruction instructs the target electronic device to store the at least one piece of first audio information in the storage area specified by the audio processing service.

It can be learned that, after the user triggers the recording process on a side of the first electronic device, the first electronic device sends the first instruction to the target electronic device, so that the target electronic device activates the audio processing service and stores the at least one piece of first audio information in the storage area specified by the audio processing service. In this way, the user can subsequently process the recorded first audio information by using the audio processing service. This improves convenience of the user.

In a feasible implementation of the second aspect, the method further includes:
the first electronic device receives first notification information sent by the target electronic device, where the first notification information indicates that the audio processing service in the target electronic device is capable of storing the first audio information; and the first electronic device outputs a voice prompt based on the first notification information, where the voice prompt indicates to start recording.

It can be learned that the first electronic device receives the first notification information sent by the target electronic device, where the first notification information sent by the target electronic device may indicate that the target electronic device has currently activated the audio processing service, and the audio processing service can store the first audio information. In this way, after receiving the first notification information, the first electronic device outputs the voice prompt to indicate to start recording. The user may perceive, based on the voice prompt output by the first electronic device, that the recording process has started at a current moment, and input audio information on the side of the first electronic device. This improves interaction between the user and the first electronic device, and improves user experience.

According to a third aspect, an embodiment of this application provides an interaction system. The interaction system includes a first electronic device and a second electronic device.

The first electronic device detects a first trigger operation, and sends at least one piece of recorded first audio information to the second electronic device. Then, the second electronic device receives the at least one piece of first audio information and displays a first window corresponding to an audio processing service, where the first window includes the at least one piece of first audio information. When displaying the first window on a target interface of at least one target application, the second electronic device detects an operation of dragging the first audio information in the first window to the target interface, and shares the first audio information to the at least one target application.

According to a fourth aspect, an embodiment of this application provides an electronic device, where the electronic device includes a memory and one or more processors, the memory is coupled to the processor, the memory stores computer program code, the computer program code includes computer instructions, and when the computer instructions are executed by the processor, the electronic device is caused to perform the audio processing method according to the first aspect or the audio processing method according to the second aspect.

According to a fifth aspect, an embodiment of this application provides a computer-readable storage medium, where the computer-readable storage medium stores instructions, and when the instructions are run on a computer, the computer is caused to perform the audio processing method according to the first aspect or the audio processing method according to the second aspect.

### BRIEF DESCRIPTION OF DRAWINGS

FIG. 1(A) to FIG. 1(E) are diagrams of a first scenario in which audio processing is performed by using a wearable device and another electronic device according to an embodiment of this application;
FIG. 2(A) to FIG. 2(C) are diagrams of a second scenario in which audio processing is performed by using a wearable device and another electronic device according to an embodiment of this application;
FIG. 3(A) and FIG. 3(B) are diagrams of a third scenario in which audio processing is performed by using a wearable device and another electronic device according to an embodiment of this application;
FIG. 4 is a diagram of an interaction system according to an embodiment of this application;
FIG. 5 is a diagram of a hardware structure of an electronic device according to an embodiment of this application;
FIG. 6(A) to FIG. 6(C) are diagrams of a software structure of an electronic device according to an embodiment of this application;
FIG. 7 is a diagram of a hardware structure of a wireless headset according to an embodiment of this application;
FIG. 8 is a schematic flowchart of an audio processing method according to an embodiment of this application;
FIG. 9 is a diagram of an interface of a call recording scenario of a mobile phone that has a recording function according to an embodiment of this application;
FIG. 10(A) and FIG. 10(B) are diagrams of an interface of a floating control corresponding to an audio stack according to an embodiment of this application;
FIG. 11(A) and FIG. 11(B) are diagrams of a recording status prompt interface according to an embodiment of this application;
FIG. 12(A) and FIG. 12(B) are diagrams of an interface for marking a quantity of audio information according to an embodiment of this application;
FIG. 13(A) and FIG. 13(B) are diagrams of an interface of a sidebar according to an embodiment of this application;
FIG. 14(A) to FIG. 14(D) are diagrams of an interface of a first floating window according to an embodiment of this application;
FIG. 15(A) to FIG. 15(D) are diagrams of a dialog interface corresponding to a communication application according to an embodiment of this application;
FIG. 16(A) to FIG. 16(C) are diagrams of an interface on which an audio stack enters a multi-select mode according to an embodiment of this application;
FIG. 17(A) and FIG. 17(B) are diagrams of an interface of a target icon corresponding to an audio stack according to an embodiment of this application;
FIG. 18 is a diagram of an interface for sharing audio information to a first application according to an embodiment of this application;
FIG. 19 is a diagram of an interface for sharing a target object to a second application according to an embodiment of this application;
FIG. 20 is a diagram of an interface for exiting an audio stack according to an embodiment of this application;
FIG. 21 is an interaction diagram showing audio information synchronization according to an embodiment of this application;
FIG. 22 is a diagram of an interface of a list of to-be-synchronized devices according to an embodiment of this application;
FIG. 23 is a diagram of an interface of a prompt window according to an embodiment of this application; and
FIG. 24 is a diagram of a structure of an electronic device according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same functions or purposes. A person skilled in the art may understand that words such as "first" and "second" do not limit a quantity or an execution sequence, and the words such as "first" and "second" do not indicate a definite difference. In addition, in some embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

Currently, with rapid development of artificial intelligence technologies, wearable devices are becoming popular. Many users may wear the wearable devices every day and for a long time. These wearable devices are small and convenient. When a user wears a wearable device, the wearable device may communicate with another electronic device by using a communications technology. When the wearable device is a wireless headset and the another electronic device is a mobile phone, the wireless headset may establish a Bluetooth communication connection to the mobile phone. When the user wears the wireless headset and uses the mobile phone to make a call, the user may perform call recording by using the wireless headset. When the user wears the wireless headset and uses the mobile phone to listen to music, the user may further record a music clip and the like by using the wireless headset.

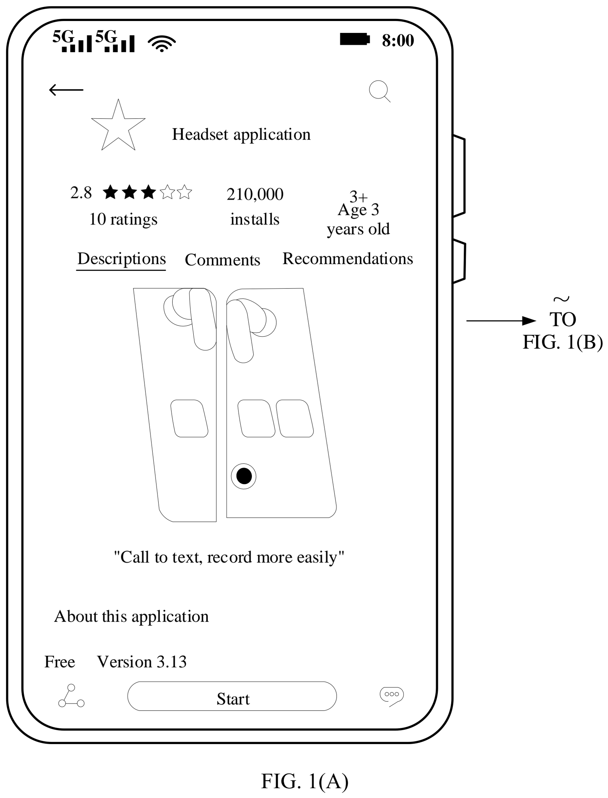

FIG. 1(A) to FIG. 1(E) show a first scenario in which a user performs audio processing by using a wearable device and another electronic device.

For example, the another electronic device represented by a mobile phone and the wearable device represented by a wireless headset are used to perform call recording. FIG. 1(A) is a diagram of an installation interface of installing an application on the mobile phone. The user needs to wear the wireless headset and establish a communication connection between the wireless headset and the mobile phone. The user further needs to install a headset application, corresponding to the wireless headset, on the mobile phone. Then, an open control on the installation interface is tapped, to trigger entry into a user interface corresponding to the headset application.

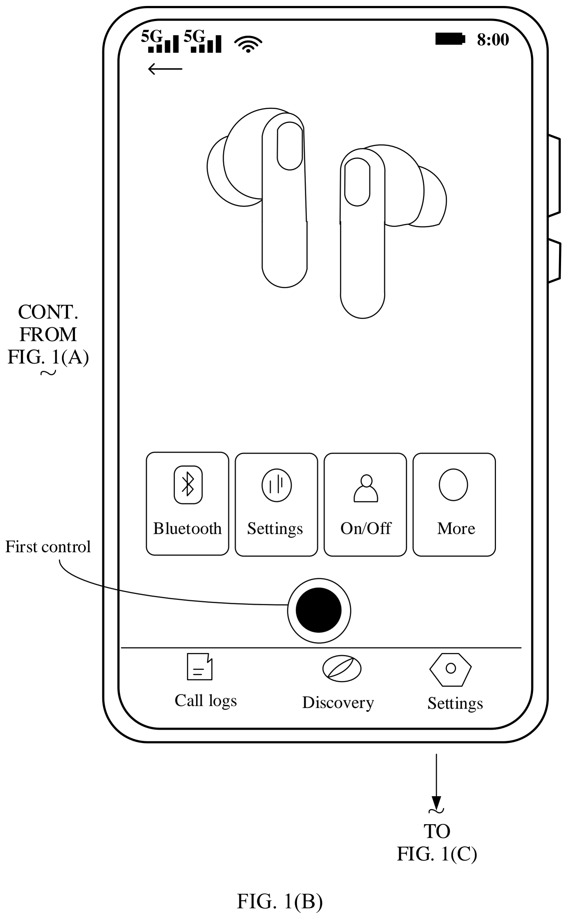

With reference to FIG. 1(B), in response to the tap operation on the open control, the mobile phone starts the headset application and displays an interface of the headset application. The interface of the headset application includes a first control. The user may tap the first control to trigger entry into a recording function page corresponding to the first control.

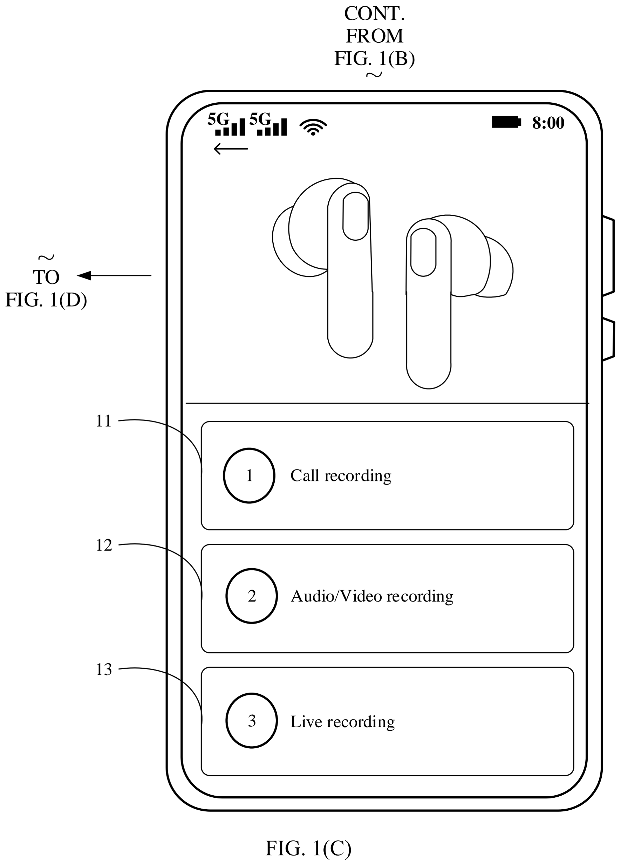

In a process in which the user performs call recording by using the headset and the mobile phone, with reference to FIG. 1(C), the mobile phone displays the recording function page in response to the tap operation on the first control, and the recording function page may include a call recording control 11, an audio/video recording control 12, and an onsite recording control 13. Then, the user may tap the call recording control 11 to trigger entry into a recording main page.

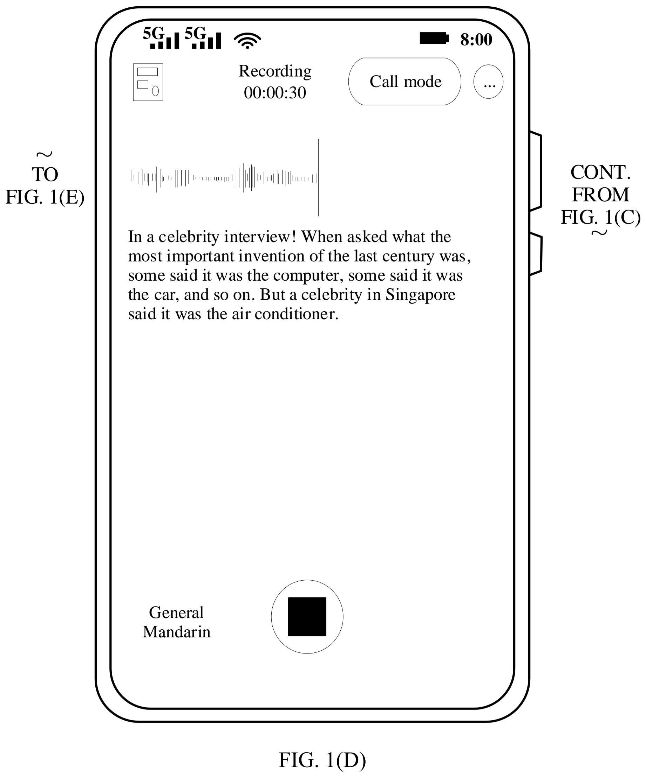

With reference to FIG. 1(D), in response to the tap operation on the call recording control 11, the mobile phone starts to record audio information in a call process, and displays the recording main page. It should be noted that the mobile phone may also trigger entry into a corresponding recording page in response to a tap on the audio/video recording control 12 and the onsite recording control 13.

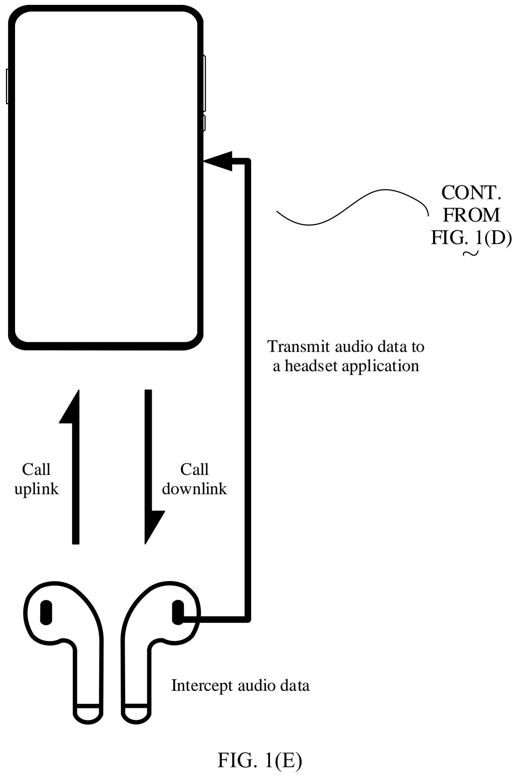

Specifically, in a process in which call recording is performed by using the mobile phone and the wireless headset, with reference to FIG. 1(E), the wireless headset intercepts an uplink call audio signal (namely, an incoming call audio signal of a peer call user) and a downlink call audio signal (namely, an outgoing call audio signal, of a local call user, collected through a microphone) to obtain audio information in a call process, and transmits the audio information to the headset application on the mobile phone, to complete the recording process.

It may be figured out that, in the foregoing scenario, the user needs to repeatedly start the headset application before each time of recording.

In addition, during recording, the headset application on the mobile phone needs to continuously run. If the user wants to use another application on the mobile phone during recording, displaying of the headset application relies on an application floating window provided by an operating system.

For example, the user uses a video application to play a video, and enters the headset application to trigger a recording process. Then, if the user wants to switch from the headset application to the video application, the operating system needs to display the application floating window corresponding to the headset application. If the operating system does not support displaying of the application floating window, the user needs to first navigate to the video application and switch a video playing page to a picture-in-picture mode, and then enter the headset application to trigger the recording process. It can be learned that the user needs to perform a series of cumbersome operations, which reduces audio processing efficiency and causes poor user experience.

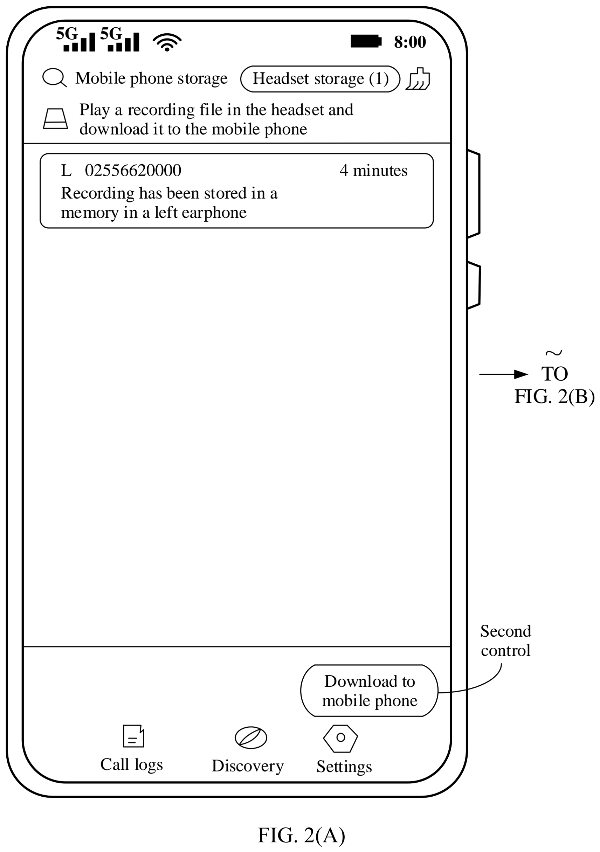

FIG. 2(A) to FIG. 2(C) show a second scenario in which a user performs audio processing by using a wearable device and another electronic device.

An example continues to be used in which onsite recording is performed by using a mobile phone and a wireless headset. The wireless headset may combine a user voice audio signal and an ambient sound audio signal that are collected through a microphone into one channel of audio information. Then, the audio information is compressed and stored in a memory of the wireless headset. Then, the user may establish a communication connection between the mobile phone and the wireless headset, and synchronize the audio information in the wireless headset to the mobile phone.

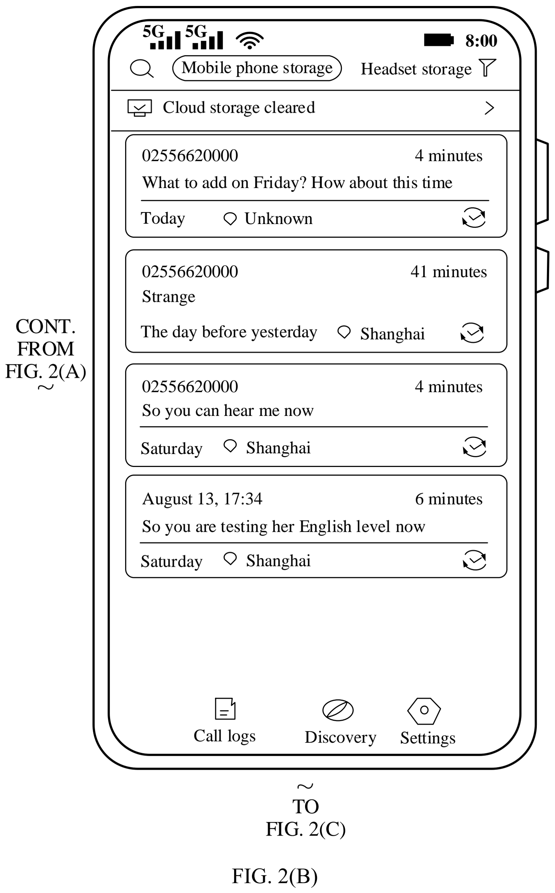

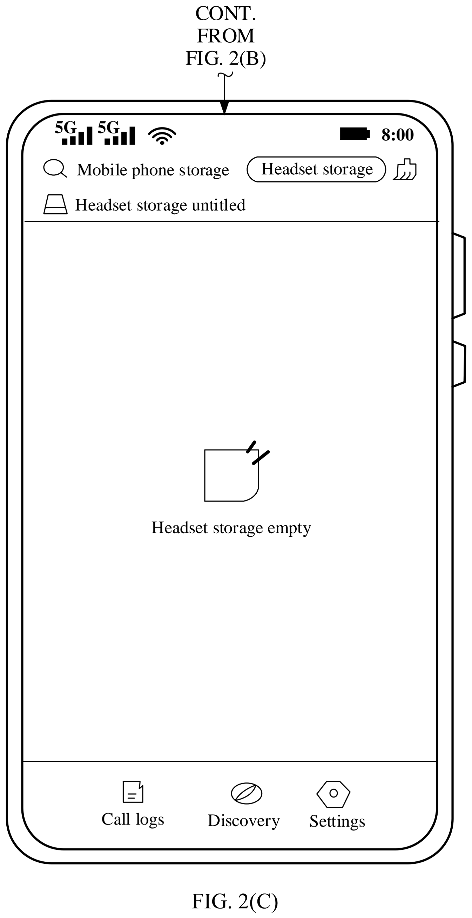

With reference to FIG. 2(A), the user may tap a second control on an interface of the headset application, to trigger a process of synchronizing the audio information in the wireless headset to the mobile phone. With reference to FIG. 2(B), the mobile phone synchronizes the audio information in the wireless headset to the mobile phone in response to the tap operation on the second control, so that the user can play the audio information by using the headset application. In addition, with reference to FIG. 2(C), the mobile phone releases the audio information stored in the wireless headset, to complete the entire process of onsite recording and listening to the recording.

It may be figured out that, in the foregoing scenario, the user needs to manage recording data by using the headset application, and needs to rely on the headset application each time the recording data is used. The solution is inconvenient, and further causes poor user experience.

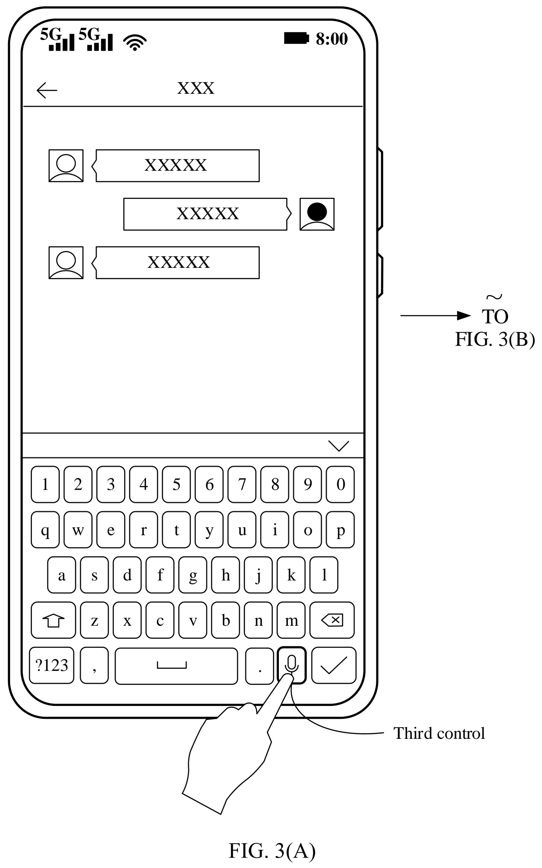

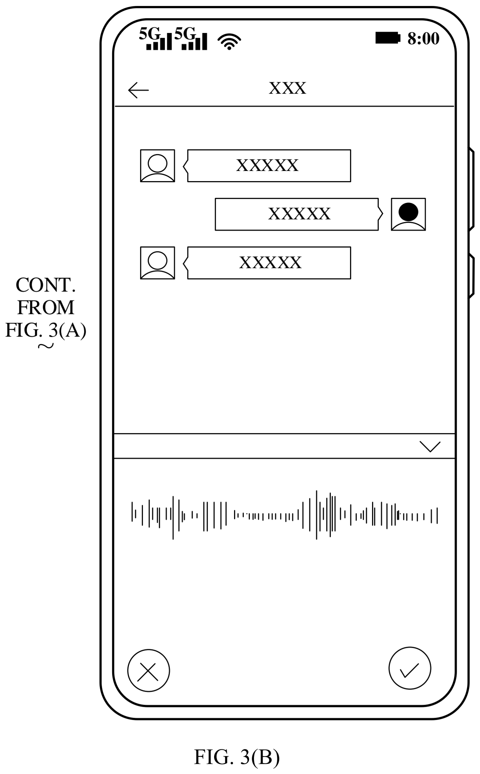

FIG. 3(A) and FIG. 3(B) show a third scenario in which a user performs audio processing by using a wearable device and another electronic device.

An example continues to be used in which a user performs a voice input. The user may trigger a voice input in the mobile phone, and input corresponding audio information by using a wireless headset. With reference to FIG. 3(A), for example, when using an instant messaging application, the user may tap a third control on an input method interface to trigger a voice input and speak by using the wireless headset. With reference to FIG. 3(B), the mobile phone invokes, in response to the tap operation on the third control, an input method application to receive the audio information collected by the wireless headset, and displays a recording interface.

It may be figured out that, in the foregoing scenario, the mobile phone and the wireless headset only change a text input manner to a voice input manner, and each time before the user input audio information by using the wireless headset, the user needs to perform triggering in the mobile phone.

It may be learned from the foregoing content that, in a current process of performing audio processing by the wireless headset and the mobile phone, in many scenarios, a problem still exists that audio processing efficiency is reduced because the user needs to perform cumbersome operations. This affects user experience.

Based on the foregoing content, embodiments of this application provide an audio processing method and an electronic device. The method provided in embodiments of this application may be applied to a scenario in which a wearable device performs audio processing with another electronic device. When a user wears the wearable device and the wearable device establishes a communication connection to the another electronic device, the user may quickly record audio information by operating only the wearable device, and does not need to perform an operation on the another electronic device connected to the wearable device. After detecting a trigger operation of the user, the wearable device may obtain the audio information, and store the audio information in the another electronic device. In this way, voice content that the user wants to record may be recorded. An operation process of the user is simplified, a headset application corresponding to the wearable device does not need to be installed in the another electronic device, and the user does not need to perform cumbersome operations on the headset application. Further, audio information is quickly recorded, and user experience is improved.

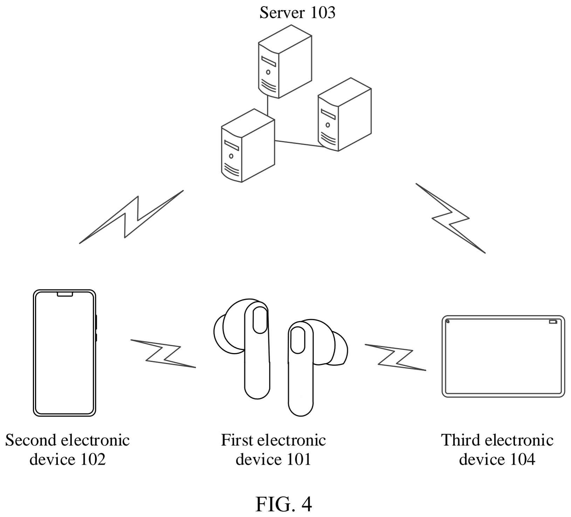

The audio processing method provided in this application may be applied to an interaction system. With reference to FIG. 4, an interaction system provided in an embodiment of this application includes a first electronic device 101 (for example, a wireless headset of the user) and a second electronic device 102 (for example, a mobile phone of the user).

In some embodiments, a communication connection may be established between the first electronic device 101 and the second electronic device 102. The communication connection may include a wired communication connection or a wireless communication connection. For example, the wireless communication connection may include a short-range wireless communication connection such as a Bluetooth communication connection, a near field communication connection, and a wireless local area network communication connection.

In some other embodiments, the interaction system provided in this embodiment of this application may further include a third electronic device 104 (a tablet computer of the user). A communication connection may be established between the third electronic device 104 and the first electronic device 101 and between the third electronic device 104 and the second electronic device 102.

In a possible implementation, the first electronic device 101 may establish a wireless connection (for example, a Bluetooth connection) to both the second electronic device 102 and the third electronic device 104. In addition, the first electronic device 101 may process an audio service of either the second electronic device 102 or the third electronic device 104 at a same moment. The first electronic device 101 may choose, based on audio service statuses corresponding to the second electronic device 102 and the third electronic device 104, to process the audio service corresponding to the second electronic device 102 or the audio service corresponding to the third electronic device 104.

In another possible implementation, the first electronic device 101 may establish a wireless connection (for example, a Bluetooth connection) to both the second electronic device 102 and the third electronic device 104. In addition, the first electronic device 101 may simultaneously process audio services corresponding to the second electronic device 102 and the third electronic device 104.

In another possible implementation, the first electronic device 101 may establish a wireless connection (for example, a Bluetooth connection) to only one of the second electronic device 102 and the third electronic device 104. In addition, the first electronic device 101 may process an audio service of either the second electronic device 102 or the third electronic device 104 at a same moment. The first electronic device 101 may choose, based on audio service statuses corresponding to the second electronic device 102 and the third electronic device 104, to establish a wireless connection to the second electronic device 102 or the third electronic device 104, and process the audio service corresponding to the second electronic device 102 or the audio service corresponding to the third electronic device 104.

In some other embodiments, the interaction system provided in this embodiment of this application may further include a server 103. A communication connection is established between the first electronic device 101 and the second electronic device 102 and between the server 103 and the third electronic device 104. The server 103 may be configured to support a communication service among the first electronic device 101, the second electronic device 102, and the third electronic device 104, to complete communication between the devices. The server 103 may be implemented by a server cluster including a plurality of servers, or may be implemented by one server. It should be noted that the server 103 may not be disposed in the interaction system. This is not specifically limited in embodiments of this application.

In some embodiments, the user may use a wireless headset to perform audio processing with another electronic device. There may be one or more other electronic devices. For example, the user may record a call when wearing a headset and using a mobile phone to make a call, and edit and share audio information corresponding to the call recording in the mobile phone. For another example, the user may further perform audio recording in a process in which the user wears a headset and uses a tablet computer to play an audio and a video, and edit and share audio information corresponding to the audio recording in the tablet computer.

In some embodiments, a wireless communication technology for establishing a wireless communication connection includes but is not limited to at least one of the following: a wireless local area network (wireless local area network, WLAN) (for example, a wireless fidelity (wireless fidelity, Wi-Fi) network), Bluetooth (Bluetooth, BT) (for example, conventional Bluetooth or Bluetooth low energy (Bluetooth low energy, BLE)), near field communication (near field communication, NFC), ZigBee (ZigBee), frequency modulation (frequency modulation, FM), infrared (infrared, IR), and the like.

It may be understood that the electronic device in this application may be, for example, a mobile phone, a tablet computer, a personal computer (personal computer, PC), a personal digital assistant (personal digital assistant, PDA), a smartwatch, a netbook, a wearable device, an augmented reality (augmented reality, AR) device, a virtual reality (virtual reality, VR) device, a vehicle-mounted device, a smart screen, an intelligent vehicle, a smart acoustic system, or a robot. A specific form of the electronic device is not limited in this application.

In addition, operating systems installed on the first electronic device 101, the second electronic device 102, and the third electronic device 104 include but are not limited to iOS^{®}, Android^{®}, Harmony^{®}, Windows^{®}, Linux^{®}, or another operating system. A specific type of the electronic device and a type of the installed operating system are not limited in this application.

The interaction system provided in this embodiment of this application may further include another electronic device different from the first electronic device 101, the second electronic device 102, and the third electronic device 104. The interaction system provided in this embodiment of this application includes but is not limited to interaction between three devices, or may include interaction between one device and a plurality of devices. A person skilled in the art may determine types and a quantity of electronic devices based on an actual requirement, and these designs do not go beyond the protection scope of embodiments of this application.

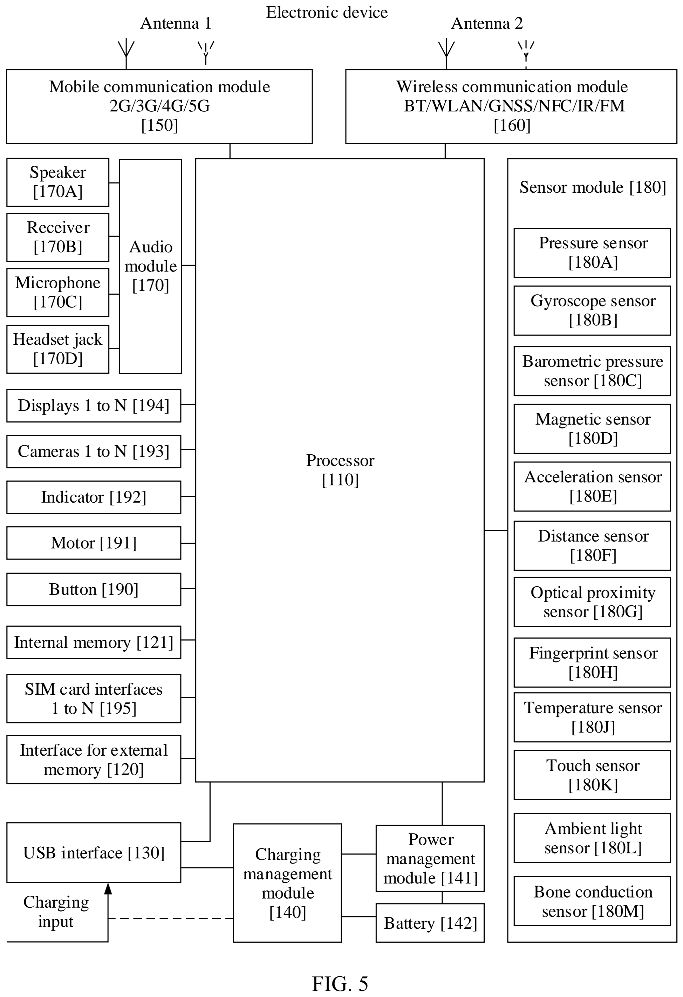

The second electronic device 102 and the third electronic device 104 in this embodiment of this application may be implemented by using different/same devices. For example, the second electronic device 102 and the third electronic device 104 in this embodiment of this application may be implemented by using a hardware structure in FIG. 5.

FIG. 5 shows an example of a diagram of a structure of an electronic device.

The electronic device may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in the present invention does not constitute a specific limitation on the electronic device. In some other examples of this application, the electronic device may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some examples, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some examples, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that an interface connection relationship between the modules that is illustrated in the present invention is merely an example for description, and does not constitute a limitation on a structure of the electronic device. In some other examples of this application, the electronic device may alternatively use an interface connection manner different from that in the foregoing example, or use a combination of a plurality of interface connection manners.

The charging management module 140 is configured to receive a charging input from a charger.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other examples, the antenna may be used in combination with a tuning switch.

The mobile communication module 150 may provide a wireless communication solution that is applied to the electronic device and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some examples, at least some functional modules in the mobile communication module 150 may be disposed in the processor 110. In some examples, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor.

The application processor outputs a sound signal by using an audio device (which is not limited to the speaker 170A, the receiver 170B, or the like), or displays an image or a video on the display 194. In some examples, the modem processor may be an independent component. In some other examples, the modem processor may be independent of the processor 110, and is disposed in a same component as the mobile communication module 150 or another functional module.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some examples, the electronic device may include one or N displays 194, where N is a positive integer greater than 1.

The electronic device may implement a photographing function by using the ISP, the camera 193, the video codec, the GPU, the display 194, the application processor, and the like.

The electronic device may implement an audio function, for example, music playing and recording, by using the audio module 170, the speaker 170A, the receiver 170B, the microphone 170C, the headset jack 170D, the application processor, and the like.

A software system of the electronic device may use a layered architecture, an event-driven architecture, a microkernel architecture, a microservice architecture, or a cloud architecture. In examples of the present invention, an Android system with a layered architecture is used as an example to illustrate the software structure of the electronic device.

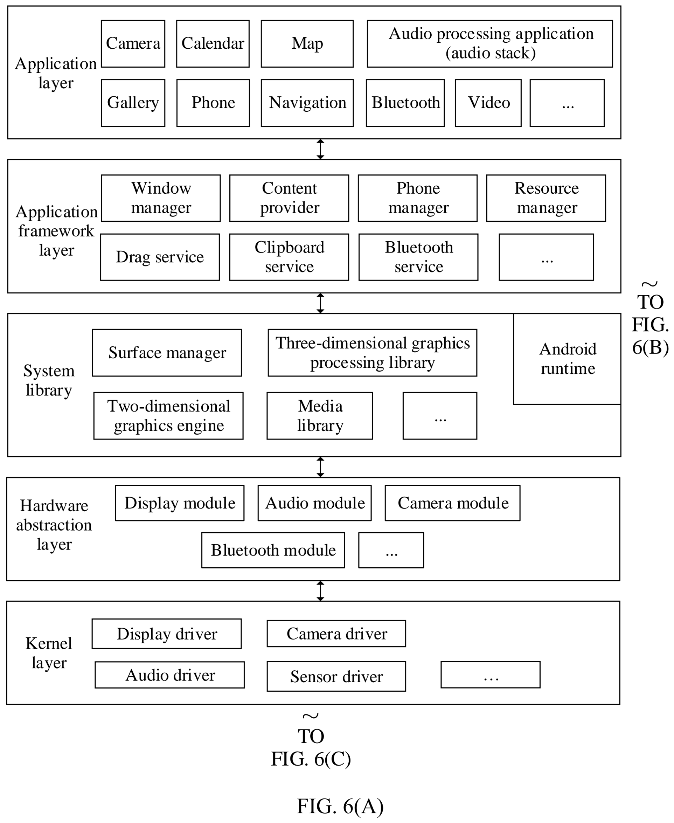

A second electronic device 102 and a third electronic device 104 in this embodiment of this application may be implemented by using a software structure in FIG. 6(A).

FIG. 6(A) shows an example of a diagram of a structure of a mobile phone.

In a layered architecture, software is divided into several layers, and each layer has a clear role and task. The layers communicate with each other through a software interface. In some examples, an Android system is divided into five layers: an application layer, an application framework layer, an Android runtime (Android Runtime) and system library, a hardware abstraction layer (Hardware Abstraction Layer, HAL), and a kernel layer from top to bottom.

The application layer may include a series of application packages.

As shown in FIG. 6(A), the application package may include applications such as Camera, Gallery, Calendar, Phone, Map, Navigation, Bluetooth, and Video, and an audio processing application such as an audio stack (Audio stack). It should be noted that the audio stack may also be understood as an audio processing service. This is not limited in embodiments of this application.

In some embodiments, the audio stack may be activated by another electronic device such as a wireless headset, or may temporarily or permanently receive audio information input by another electronic device. In addition, the audio stack may be invoked by each application, and the audio information in the audio stack may also be invoked by each application. A user may perform operations such as viewing and editing on the audio information in the audio stack by dragging or by selecting an operation corresponding to the audio stack.

The application framework layer provides an application programming interface (application programming interface, API) and a programming framework for an application at the application layer. The application framework layer includes some predefined functions.

As shown in FIG. 6(A), the application framework layer may include a window manager, a content provider, a phone manager, a resource manager, a drag service, a clipboard service, a Bluetooth service, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The phone manager is configured to provide a communication function for the electronic device 100, for example, management of a call status (including answering, declining, or the like).

The resource manager provides various resources such as a localized character string, an icon, an image, a layout file, and a video file for an application.

The drag service provides a drag function for an application, for example, dragging an image, a text, or an audio in the application. The clipboard service provides a clipboard function for an application, for example, copying and pasting an image, a text, and an audio in the application. The Bluetooth service application provides a Bluetooth function, for example, enables an application to exchange data with the another electronic device.

The Android runtime includes a core library and a virtual machine. The Android runtime is responsible for scheduling and management of an Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer runs in user space (user space), and may include a display module, an audio module, a camera module, a Bluetooth module, and the like. The hardware abstraction layer may be used to encapsulate a kernel layer driver and provides a calling interface for a layer above the hardware abstraction layer.

The kernel layer is a layer between hardware and software. The kernel layer includes at least a display driver, a camera driver, an audio driver, and a sensor driver.

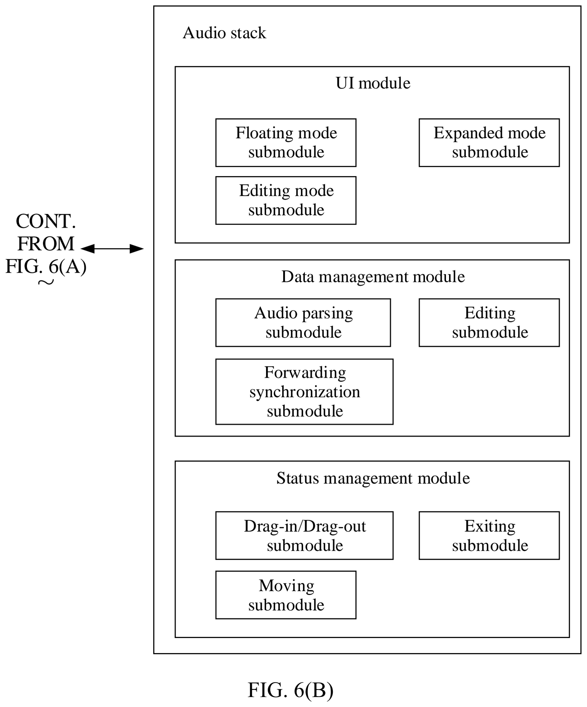

In this embodiment of this application, with reference to FIG. 6(B), the audio stack may include a UI module, a data management module, and a status management module.

The UI module includes a floating mode submodule, an expanded mode submodule, and an editing mode submodule.

In some embodiments, the floating mode submodule is configured to: detect a trigger operation of the user, and control the audio information in the audio stack to be presented in a floating mode. For example, the floating mode submodule detects a drag operation performed by the user on the audio information, and controls the audio information to be presented in the floating mode, to insert the audio information into a corresponding location in the application. The expanded mode submodule is configured to: detect a trigger operation performed by the user on the audio stack, and expand a first floating window corresponding to the audio stack. The editing mode submodule is configured to: detect a trigger operation performed by the user on the audio information, and present the audio information in the audio stack in an editing mode. For example, the editing mode submodule detects that the user selects a multi-select option, and controls the audio stack to enter a multi-select mode.

The data management module includes an audio parsing submodule, an editing submodule, and a forwarding synchronization submodule.

In some embodiments, the audio parsing submodule is configured to: detect a trigger operation performed by the user on the audio information, and parse the audio information, for example, playing audio information and converting the audio information into a text. The editing submodule is configured to: detect an editing operation performed by the user on the audio information, and edit the audio information, for example, deleting the audio information, storing the audio information, copying text content corresponding to the audio information, and adding the audio information to Favorites. The forwarding synchronization submodule is configured to: detect a forwarding operation performed by the user on the audio information, and forward the audio information. For example, the forwarding synchronization submodule detects a trigger operation of the user, and forwards the audio information to an application installed on the mobile phone.

The status management module includes a drag-in/drag-out submodule, an exiting submodule, and a moving submodule.

In some embodiments, the drag-in/drag-out submodule is configured to: detect a drag operation performed by the user on the audio information, and drag, to a location corresponding to the drag operation, the audio information to a location corresponding to the drag operation/drag the audio information . The exiting submodule is configured to: detect an exit operation performed by the user on the audio information, and end running of the audio stack. The moving submodule is configured to: detect a moving operation performed by the user on the audio information, and control the audio stack to move to a location corresponding to the moving operation.

It may be understood that architectures corresponding to in FIG. 5, FIG. 6(A), and FIG. 6(B) are applicable to electronic devices such as a mobile phone, a tablet computer, and a notebook computer.

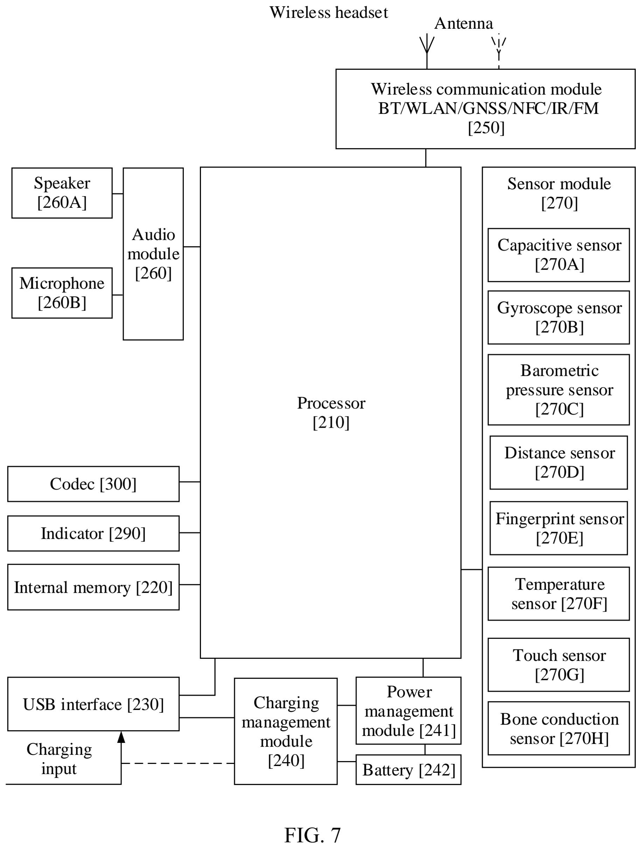

A first electronic device 101 in this embodiment of this application may be implemented by using a hardware structure in FIG. 7.

A wireless headset is used as an example. FIG. 7 shows an example of a diagram of a structure of the wireless headset.

With reference to FIG. 7, the wireless headset provided in this embodiment of this application may include a processor 210, an internal memory 220, a universal serial bus (universal serial bus, USB) interface 230, a charging management module 240, a power management module 241, a battery 242, an antenna, a wireless communication module 250, an audio module 260, a speaker 260A, a microphone 260B, a sensor module 270, a button 280, an indicator 290, a codec 300, and the like. The sensor module 270 may include a capacitive sensor 270A, a gyroscope sensor 270B, a barometric pressure sensor 270C, a distance sensor 270D, a fingerprint sensor 270E, a temperature sensor 270F, a touch sensor 270G, a bone conduction sensor 270H, and the like.

The processor 110 may be a single-chip microcomputer (micro control unit, MCU), and the MCU includes one or more processing units. For example, the processor 110 may include a modem processor, a controller, a digital signal processor (digital signal processor, DSP), a baseband processor, a memory, and/or a neural network processing unit (neural-network processing unit, NPU). Different processing units may be independent components, or may be integrated into one or more processors.

The speaker 260A, also referred to as a "loudspeaker", is configured to convert an audio electrical signal into a sound signal. The wireless headset may be used to listen to music, answer a call, or the like by using the speaker 260A.

The microphone 260B, also referred to as a "mic" or "mike", is configured to convert a sound signal into an electrical signal. When making a call or sending voice information, a user may make a sound near the microphone 260B through the mouth of the user, to input a sound signal to the microphone 260B. The wireless headset may be provided with at least one microphone 260B. In some other embodiments, the wireless headset may be provided with two microphones 260B, for example, a main microphone and a feedback microphone. The primary microphone may be configured to pick up a sound signal corresponding to the user. The feedback microphone may be configured to: collect a sound signal corresponding to the user and a surrounding environment, and implement a noise reduction function.

In some other embodiments, three, four, or more microphones 260B may alternatively be disposed in the wireless headset, to collect a sound signal, implement noise reduction, identify a sound source, implement a directional recording function, and the like.

The codec 300 is configured to support compression and decompression of video data and audio data. In some embodiments, the codec 300 may encode and compress the collected audio and video digital signals.

The processor 210, the internal memory 220, the antenna, the wireless communication module 250, the audio module 260, the speaker 260A, the microphone 260B, the sensor module 270, the button 280, and the like may be located in a headset body of the wireless headset. The universal serial bus interface 230, the charging management module 240, the power management module 241, the battery 242, and the indicator 290 may be located in a headset case corresponding to the wireless headset.

It may be understood that the structure illustrated in this embodiment of this application does not constitute a specific limitation on the wireless headset. In some other embodiments of this application, the wireless headset may include more or fewer components than those shown in the figure, or a combination of some components, or splits from some components, or a different component layout. The components shown in the figure may be implemented by hardware, software, or a combination of software and hardware.

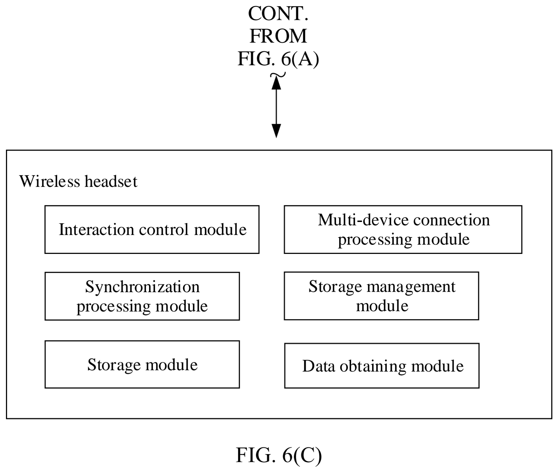

The first electronic device 101 in this embodiment of this application may be implemented by using a software structure in FIG. 6(C).

With reference to FIG. 6(C), the wireless headset may include a data obtaining module, an interaction control module, a multi-device connection processing module, a synchronization processing module, a storage management module, and a storage module.

The data obtaining module is configured to obtain corresponding audio information during audio processing. The storage module is configured to store audio information generated during audio processing. The multi-device connection processing module is configured to establish a communication connection to another electronic device. The interaction control module is configured to: identify a trigger operation input by the user, and establish interaction with the another electronic device. The storage management module is configured to store the audio information during audio processing in an audio stack of the another electronic device. The synchronization processing module is configured to: synchronize audio information to the audio stack of the another electronic device, and synchronously change the audio information in the audio stack of the another electronic device.

All technical solutions in the following embodiments may be implemented on an electronic device that has the foregoing hardware architecture and software architecture. For ease of subsequent description, an example in which the first electronic device 101 is a wireless headset (headset for short), the second electronic device 102 is a mobile phone, and the third electronic device 104 is a tablet computer is used for description in this embodiment of this application.

To simplify a user operation and help the user quickly perform audio processing by using the headset and the mobile phone, the headset provided in this embodiment of this application may detect a trigger operation of the user, and directly store, in an audio stack of the mobile phone, audio information that the user wants to record. Then, the mobile phone may detect a trigger operation on the audio stack, and play and edit the audio information. In some embodiments, the mobile phone may insert the audio information in the audio stack into a corresponding location of an application, that is, share the audio information to the application installed in the mobile phone.

Specifically, in a call recording scenario, the user may trigger a recording function through the headset in a call process. The headset records conversation between a peer call user and a local call user, and stores corresponding audio information in the audio stack. In an onsite recording scenario, the user may trigger a recording function through the headset in a target scenario, for example, during a meeting. The headset records a sound generated during the meeting, and stores audio information corresponding to the meeting in the audio stack. In an audio and video recording scenario, the user may trigger a recording function through the headset during audio or video playing. The headset records a sound generated during audio or video playing, and stores audio information corresponding to a song in the audio stack.

The user can also trigger the recording function through only the mobile phone. For example, in the call recording scenario and the audio and video recording scenario, the user may trigger the recording function through the mobile phone during the call, audio playing, or video playing. The mobile phone records the sound generated during the call, audio playing, or video playing, and stores corresponding audio information in the audio stack.

The audio stack may be a system-level service (function) in the mobile phone, and may be preconfigured before the mobile phone is delivered from a factory. The audio stack is used to receive and store audio information generated during audio processing, and various operations such as sending, copying, and deleting may be performed on the audio information in the mobile phone.

It should be noted that "audio stack" is merely a name provided in embodiments of this application for ease of solution description, and cannot be used as a limitation on a function of the solution in some examples.

In some implementation, the audio stack may be understood as a system-level service (function) in an operating system, and may be implemented by using a software component running on the operating system, or may be understood as an information storage container in the operating system. The software component running on the operating system may be an application in a general sense. Certainly, in this application, the software component (also referred to as a service) in the operating system may also be considered as "application", and the audio stack is not specifically limited in this application.

The following describes in detail the audio processing method provided in embodiments of this application.

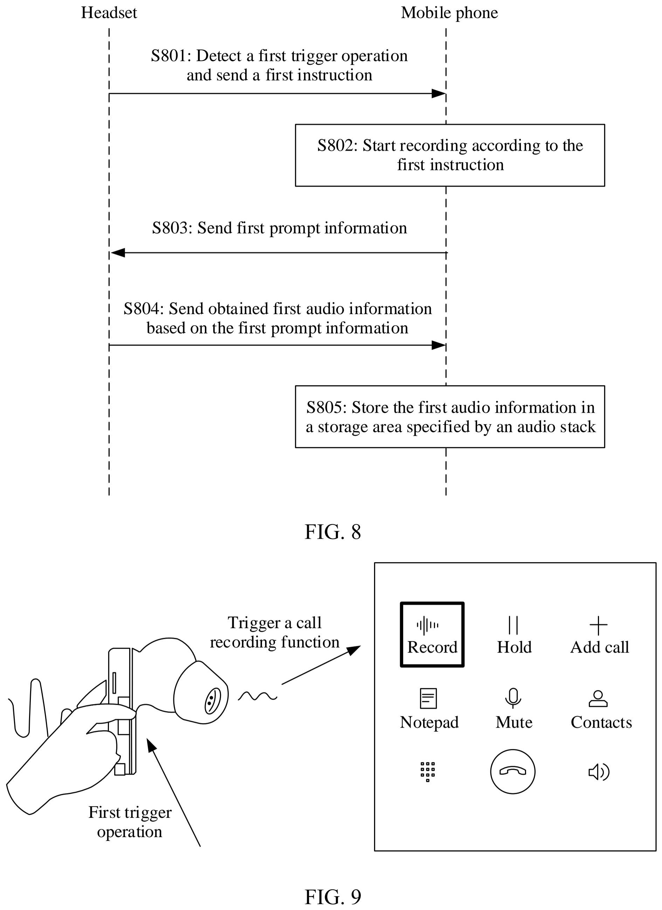

FIG. 8 is a schematic flowchart of an audio processing method according to an embodiment of this application. As shown in FIG. 8, the method may include the following steps S801 to S805.

S801: A headset detects a first trigger operation and sends a first instruction to a mobile phone, where the first instruction instructs the mobile phone to store first audio information in a storage area specified by an audio stack. In some other embodiments, the first trigger operation may alternatively be an operation performed by a user on the mobile phone, and the first instruction is triggered by the mobile phone.

S802: The mobile phone starts recording according to the first instruction.

In some embodiments of this application, a scenario of audio processing between the headset and the mobile phone may include a call recording scenario, an onsite recording scenario, an audio and video recording scenario, and the like.

The call recording scenario includes but is not limited to a recording scenario in which two parties make a call, a recording scenario in which the two parties make a voice call by using a first target application, and a recording scenario in which the two parties make a video call by using the first target application. The first target application may include an application having an audio and video call function. The first target application may further include a short video application, a live broadcast application, a social application, or the like.

The recording scenario in which the user makes a call is used as an example. The user may perform the first trigger operation on the headset in a call process, to trigger a recording function. It may be figured out that, during a phone call of the user, a communication connection is established between the headset and the mobile phone, and both the headset and the mobile phone are in a working state. In this way, the headset detects the first trigger operation and sends the first instruction to the mobile phone. Then, the mobile phone starts to perform a recording process according to the first instruction. It may be understood that the mobile phone may activate the audio stack according to the first instruction, to record audio information in a call process through the audio stack.

The onsite recording scenario includes but is not limited to a recording scenario in which the user holds a meeting, a recording scenario in which a lecture is held, a recording scenario in which a video image is captured, a recording scenario in which simultaneous interpretation is performed, a recording scenario in which live performance is performed, a recording scenario in which the user speaks, and the like.

The onsite recording scenario in which the meeting is held is used as an example. The user may perform the first trigger operation on the headset during the meeting or before the meeting starts, to trigger a recording function. It may be figured out that the user usually does not use the mobile phone during the meeting. In other words, when a communication connection is established between the headset and the mobile phone, only the headset may be in a working state, and the mobile phone may be in a standby state. In this way, the headset detects the first trigger operation and sends the first instruction to the mobile phone, and the mobile phone starts recording according to the first instruction. Specifically, the mobile phone may activate the audio stack, to record audio information during the meeting through the audio stack.

The audio and video recording scenario includes but is not limited to a recording scenario in which the user plays an audio by using a second target application and a recording scenario in which the user plays a video by using the second target application. The second target application may include an application having an audio function, and the second target application may further include a short video application, a live broadcast application, a social application, a game application, a browser application, and the like. Specific types of the first target application and the second target application are not limited in embodiments of this application.

A recording scenario in which the user plays a song by using an audio application is used as an example. The user may perform the first trigger operation on the headset during or before playing the song, to trigger a recording function. It may be figured out that during playing of the song, the user needs to play the song by using the audio application on the mobile phone, and listen to the song by using the headset. To be specific, when a communication connection is established between the headset and the mobile phone, both the headset and the mobile phone are in a working state. In this way, the headset detects the first trigger operation and sends the first instruction to the mobile phone, and the mobile phone starts recording according to the first instruction. Specifically, the mobile phone may activate the audio stack, to record audio information during playing of the song through the audio stack.

To be specific, in a process in which the headset records the audio information, the mobile phone connected to the headset activates the audio stack. It may be understood that, the mobile phone may establish a temporary or permanent file management area as a storage apparatus for the recorded audio information. In addition, after the mobile phone receives the first instruction, if the audio stack is not running, the mobile phone may start the audio stack, and display a first window corresponding to the audio stack at the front end. In other words, if the user triggers the recording function on the headset side for the first time, the mobile phone may not run the audio stack. In this case, the mobile phone may start the audio stack according to the first instruction. If it is not the first time the user triggers the recording function on the headset side, for example, in a case in which a plurality of pieces of audio information are recorded, the mobile phone may be running the audio stack currently; and after receiving the first instruction, the mobile phone may directly execute a subsequent process of storing the audio information.

In an actual application scenario, to implement audio interaction between the headset and the mobile phone, the user usually performs a wearing operation on the headset. For example, during the wearing operation, the user lifts the headset until the user wears the headset on an ear in an inclined state. Then, the user may perform the first trigger operation on the headset. The first trigger operation is used to trigger the headset to work with the mobile phone to execute a recording task. The first trigger operation may be considered as a signal for enabling audio interaction between the headset and the mobile phone.

For example, the first trigger operation may include a touch and hold operation performed by the user on the headset. For example, the user pinches the headset.

For another example, the first trigger operation may include a tap operation performed by the user on the headset, for example, the user double-taps a sensing area in the headset. The sensing area in the headset may also be implemented through a physical button.

For example, in an actual use scenario, after the user double-taps the sensing area in the headset for the first time, it indicates that an audio processing instruction is delivered to the headset. In this way, after detecting the first trigger operation, the headset performs audio processing with the mobile phone and sends the first instruction to the mobile phone.

Based on the foregoing descriptions, it can be learned that in a scenario in which the user does not take out the mobile phone to perform recording, the user performs a trigger operation only on the headset to trigger the recording function, and controls the mobile phone to start recording. The user does not need to rely on a headset application to perform recording, and does not need to perform a series of cumbersome operations on the mobile phone side. This simplifies user operations and improves user experience.

S803: The mobile phone sends first prompt information to the headset, where the first prompt information indicates that the audio stack can store the first audio information.

In some embodiments of this application, after receiving the first instruction, the mobile phone may send the first prompt information to the headset, where the first notification information indicates that the audio stack can store the first audio information. In addition, the first notification information may also indicate that the audio stack has been activated. It may be figured out that, if the user continuously triggers the audio processing process for a plurality of times within specific duration, it indicates that the mobile phone may have activated the audio stack. In view of this, if the mobile phone has activated the audio stack, the mobile phone may directly send the first prompt information to the headset after detecting the first instruction.

S804: The headset sends the obtained first audio information to the mobile phone based on the first prompt information.

S805: The mobile phone stores the first audio information in the storage area specified by the audio stack.

In some embodiments of this application, after receiving the first prompt information sent by the mobile phone, the headset may output a voice prompt, where the voice prompt indicates that recording has been started.

The voice prompt may be delivered through a voice prompt tone or a voice broadcast, for example, a voice broadcast "Recording started". In other words, a purpose of outputting the voice prompt by the headset is to enable the user to know that the recording process has started at the current moment.

In some embodiments of this application, in different scenarios, the headset obtains the first audio information differently. The following continues to provide detailed descriptions according to different scenarios.

In the onsite recording scenario, for example, when the user holds a meeting on site, the user may start the meeting after hearing the voice prompt output by the headset, to perform a voice input on the headset side. For another example, the user may also record speech content of the user, and directly perform a voice input on the headset side after hearing the voice prompt output by the headset.

In this way, in the onsite recording scenario, the headset may obtain the first audio information based on the first prompt information. The first audio information may be generated based on first voice data, and the first voice data represents voice content collected through a microphone of the headset. In an implementation, during recording, the headset may perform compression processing on the first voice data to generate the corresponding first audio information. Then, the headset sends the first audio information to the mobile phone, and the mobile phone stores the first audio information in the storage area specified by the audio stack.

In the call recording scenario, the headset may obtain the first audio information based on the first prompt information. Audio data may be generated based on second voice data and third voice data. The second voice data represents voice content of a local call user, and the third voice data represents voice content of a peer call user. In addition, during recording, the headset may further perform stream combination and compression processing on the second voice data and the third voice data to generate the corresponding first audio information. Then, the headset sends the first audio information to the mobile phone, and the mobile phone stores the first audio information in the storage area specified by the audio stack.

In an implementation, the mobile phone has a call recording function. Usually, the recording function of the mobile phone is implemented by a call recording service in the operating system. In other words, in a scenario in which the mobile phone has the recording function, the call recording service in the mobile phone may perform a recording process. In addition, the mobile phone may obtain the first audio information, to implement the recording process.

For example, with reference to FIG. 9, in the call recording scenario in which the mobile phone has the recording function, the user may trigger the recording function of the mobile phone to perform recording. For example, if the peer call user is notified of a phone number, the local call user needs to record the phone number. In this case, the local call user may perform an operation on a recording control in the mobile phone, and trigger the recording function of the mobile phone to perform recording. The call recording service in the mobile phone may generate the corresponding first audio information based on voice data of the peer call user and voice data of the local call user that is sent by the headset, and store the first audio information in the storage area specified by the audio stack. In another possible implementation, the local call user may perform the first trigger operation on the headset to trigger the recording function of the mobile phone to perform recording. Specifically, the headset detects the first trigger operation and sends the first instruction to the mobile phone. The mobile phone may invoke the call recording service according to the first instruction, and the call recording service may obtain the first audio information, and store the first audio information in the storage area specified by the audio stack.

In the audio and video recording scenario, the headset may obtain the first audio information based on the first prompt information. The first audio information may be generated based on fourth voice data, and the fourth voice data represents voice content corresponding to an audio or a video. Similarly, during recording, the headset may further perform compression processing on the fourth voice data to generate the corresponding first audio information. Then, the headset sends the first audio information to the mobile phone, and the mobile phone stores the first audio information in the storage area specified by the audio stack.

In some embodiments of this application, the headset may send the first audio information to the mobile phone in real time. The headset may also periodically send the first audio information to the mobile phone at regular intervals. For example, in a process of obtaining and sending the first audio information, corresponding audio information may be sent to the mobile phone every 0.5s upon collection.

In addition, the first audio information sent by the headset may include audio content corresponding to the audio information, recording duration corresponding to the audio information, recording start time and end time corresponding to the audio information, a recording application corresponding to the audio information, and the like. This is not specifically limited in embodiments of this application.

In some other embodiments of this application, the user may alternatively perform the first trigger operation on the mobile phone. After detecting the first trigger operation, the mobile phone activates the audio stack, to record audio information in an audio processing process through the audio stack.

In some embodiments of this application, the headset may detect a second trigger operation, stop obtaining the first audio information, and send the first audio information to the mobile phone.

The second trigger operation and the first trigger operation may be different operations, or may be a same operation. For example, the first trigger operation is a touch and hold operation. When the user performs the second trigger operation on the headset, the second trigger operation may be a release operation corresponding to the touch and hold operation. For another example, the first trigger operation is a double-tap operation. When the user performs the second trigger operation on the headset, the second trigger operation may be the double-tap operation. For another example, the first trigger operation is a double-tap operation. When the user performs the second trigger operation on the headset, the second trigger operation may be a tap operation or the like. Specific implementation forms of the first trigger operation and the second trigger operation are not specifically limited in embodiments of this application.

In other words, that the user performs the second trigger operation on the headset may be understood as that the first audio information that the user wants to record this time has been recorded. Therefore, when detecting the second trigger operation, the headset needs to terminate obtaining the first audio information, that is, terminate a current task of obtaining the first audio information.

The user may repeat the first trigger operation and the second trigger operation on the headset, to trigger recording and end recording at any moment. However, as long as the headset detects the second trigger operation, the headset stops obtaining the first audio information of this time and sends the first audio information to the mobile phone. Therefore, there may be one or more pieces of first audio information. In view of this, the user only needs to perform a simple operation on the headset, to control the recording duration and the recorded content. This improves user experience.

In some other embodiments of this application, when detecting that pause duration of a voice signal in the first audio information is greater than preset duration, the headset may further stop obtaining the first audio information. To be specific, when the user pauses during a voice input and pause time is long, the headset may automatically stop obtaining the first audio information, and complete a current task of obtaining the first audio information, without a need for the user to perform an operation on the headset again. In this way, an operation step in which the user performs recording by using the headset is more simplified. This improves user experience.

In some embodiments of this application, the mobile phone may alternatively not send the first prompt information to the headset. Since the preset duration after the first trigger operation is detected, the headset may automatically trigger obtaining the first audio information and sending the first audio information to the mobile phone. In other words, the headset may automatically control, by default based on the preset duration, the mobile phone to run the audio stack, and directly trigger subsequent execution of the recording process.

In some embodiments of this application, in the process in which the headset establishes the communication connection to the mobile phone and performs recording, specifically, an interaction control module of the headset may send the first instruction to the mobile phone when detecting the first trigger operation of the user. The mobile phone may start recording according to the first instruction, and sends the first prompt information to a data obtaining module of the headset. The data obtaining module obtains the first audio information based on the first prompt information and sends a first storage instruction to a storage management module. The storage management module sends the first audio information to the mobile phone according to the first storage instruction. The mobile phone stores the first audio information in the storage area specified by the audio stack.

In conclusion, it can be learned that, in a scenario in which the user does not take out the mobile phone, after detecting the first trigger operation, the headset obtains the audio information, and stores the audio information in the audio stack of the mobile phone. In this way, the user can trigger the recording function only on the headset side, and does not need to lift the mobile phone or perform cumbersome operations to trigger recording. In addition, the user can quickly record some important audio information, so that operation steps of the user are simplified, and the audio information can be quickly recorded. This improves user experience.

The following describes in detail a scenario in which the user takes out the mobile phone.

In some embodiments of this application, in the scenario in which the user takes out the mobile phone, still with reference to S802, after receiving the first instruction, the mobile phone displays a first control corresponding to the audio stack. Then, the mobile phone detects a fourth operation on the first control, and displays the first window corresponding to the audio stack. The first control may be a floating control. The first window may be a first floating window corresponding to the audio stack.

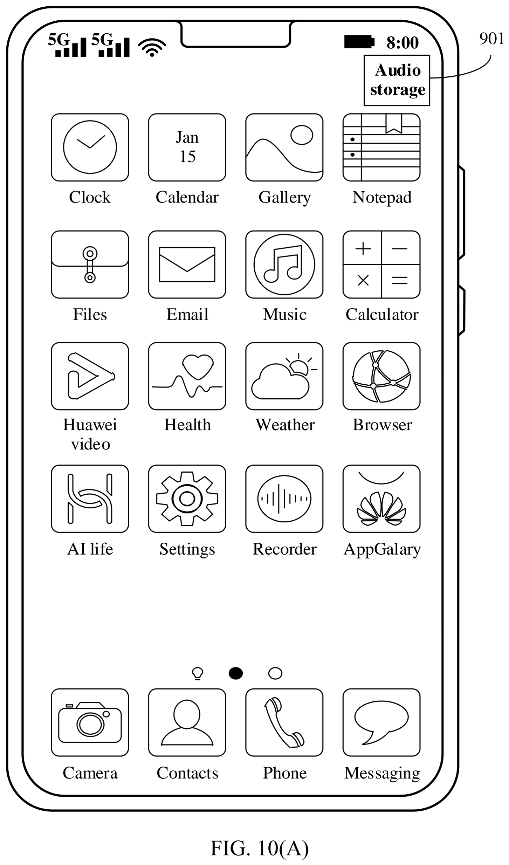

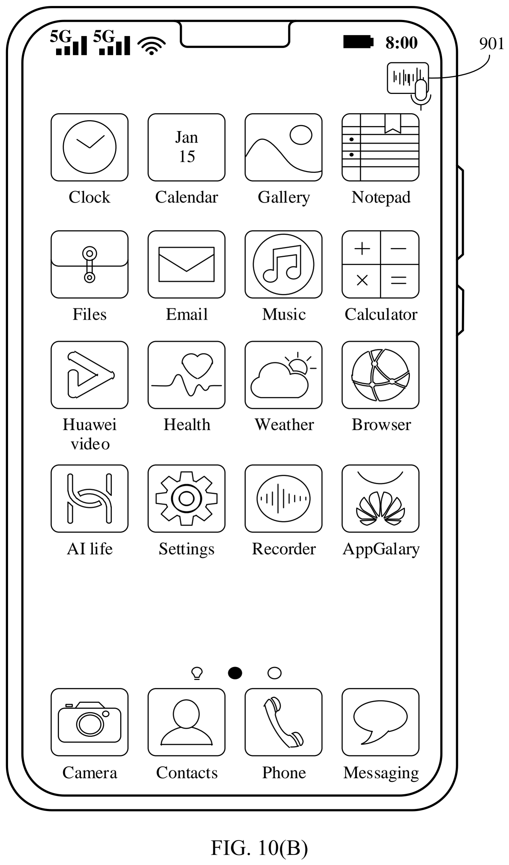

Specifically, after receiving the first instruction, the mobile phone may activate the audio stack, and display a floating control 901 corresponding to the audio stack. The mobile phone may display the floating control 901 shown in FIG. 10(A). In an example, the floating control 901 indicates a display location of the audio stack. A display form of the floating control 901 may also be implemented in a plurality of manners. For example, the floating control 901 may display a specific text prompt, for example, "Audio storage". For another example, with reference to FIG. 10(B), a pattern prompt such as a microphone and a text box or another type of symbol prompt may be further displayed. Certainly, the text prompt, the pattern prompt, and the symbol prompt may all exist, or only one of them may exist.

In an implementation, the mobile phone may display the floating control 901 at a preset specific location of the screen. For example, the mobile phone displays the floating control 901 at a right/upper left corner of the screen of the mobile phone, a left/right border, or the like.

In another possible implementation, the mobile phone may alternatively adaptively choose, based on a status of a current display interface of the mobile phone, to display the floating control 901 in a blank location, to avoid blocking displayed content of the current interface.

In an implementation, a location of the floating control 901 may be fixed.

In another possible implementation, the floating control 901 may be dragged to another location, and the another location may be any location of the current interface, or may be one or more locations allowed by the operating system by default.

In some embodiments of this application, if the user continuously triggers the audio processing process for a plurality of times within specific duration, it indicates that the mobile phone may have activated the audio stack. In this way, when the mobile phone has activated the audio stack, the mobile phone may hide the floating control 901 corresponding to the audio stack. If the mobile phone has hidden the floating control 901 prior to detection of the first instruction, after detecting the first instruction, the mobile phone may resume displaying of the floating control 901 corresponding to the audio stack.

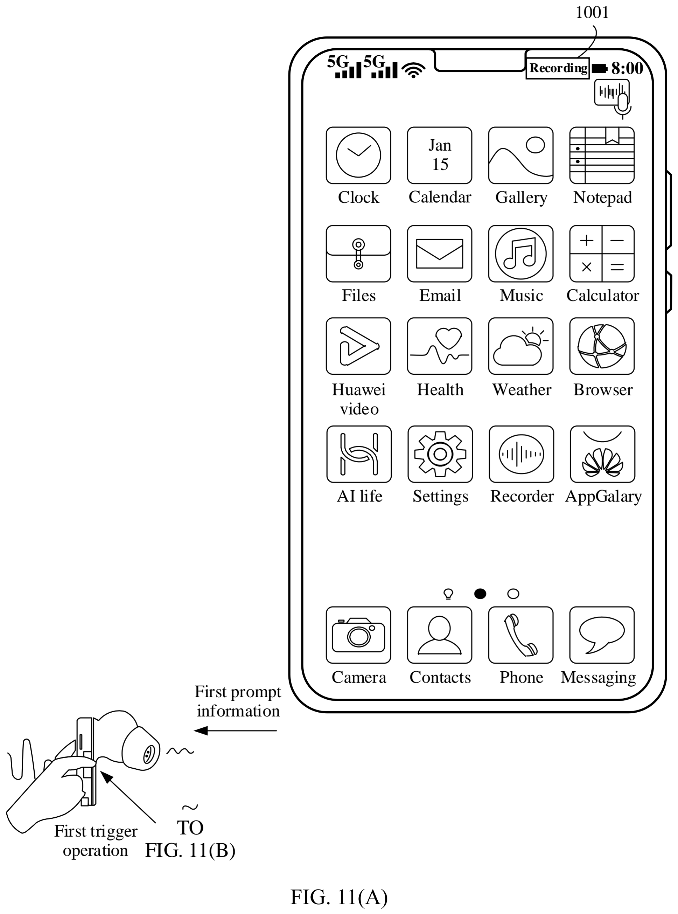

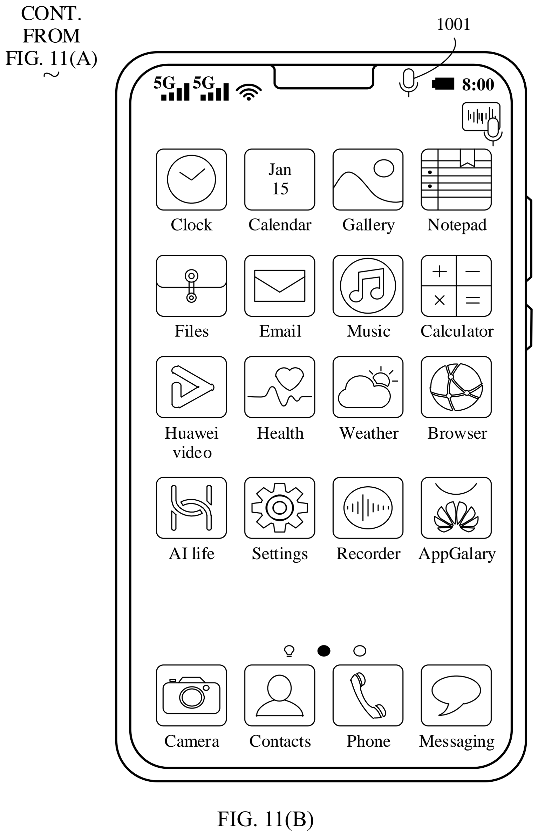

In some embodiments of this application, still with reference to S803, in a process of sending the first prompt information to the headset, the mobile phone may further display a recording status prompt in a status bar, where the recording status prompt indicates that a recording process has started. With reference to FIG. 11(A), the recording status prompt may be a specific text prompt displayed by a prompt control 1001, for example, "Recording". For another example, with reference to FIG. 11(B), the prompt control 1001 may be further used to display the pattern prompt such as a microphone.

In some embodiments of this application, the user may view a quantity of audio information by using the floating control 901.

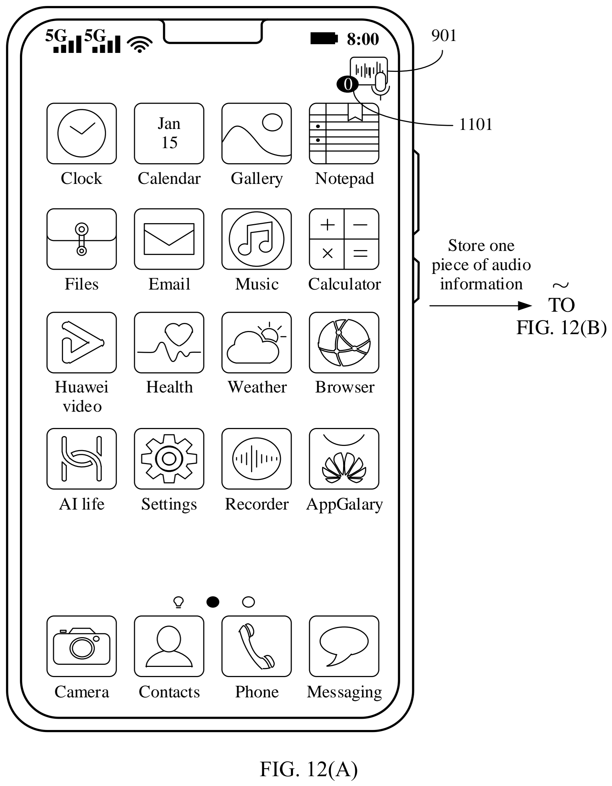

In an implementation, the mobile phone may display, on the screen, the floating control 901 of the audio stack and a quantity marker of the audio information stored in the audio stack. With reference to an interface 1101 shown in FIG. 12(A), in some examples, before the mobile phone stores the audio information in the audio stack, the floating control 901 on the interface 1101 may display a marker (for example, a superscript or a subscript), indicating a quantity of audio information stored in the audio stack this time. For example, the interface 1101 displays a quantity "0" as a subscript.

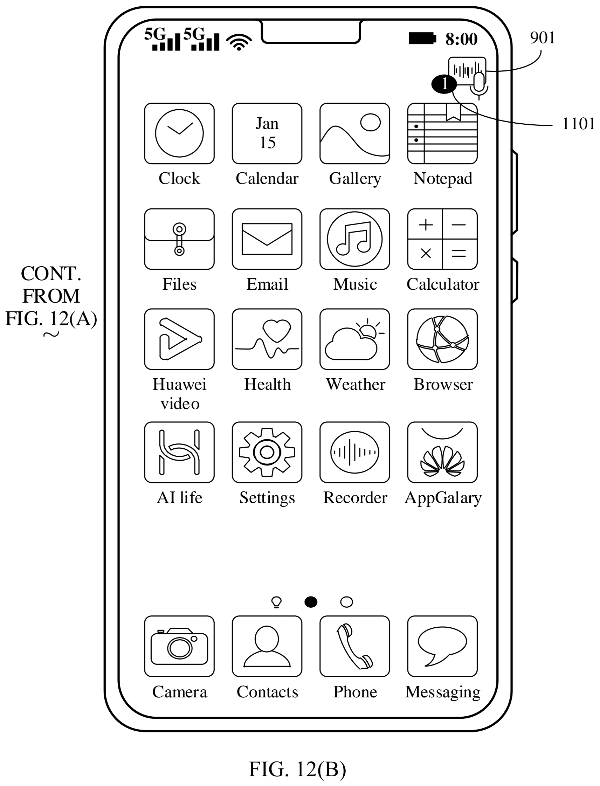

With reference to FIG. 12(B), for another example, after the mobile phone stores the audio information in the audio stack, the interface 1101 displays a quantity "1" as a subscript, indicating that the quantity of audio information stored in the audio stack this time is 1. In some examples, the marker may mark a total quantity of audio information stored in the audio stack. For example, when the user records the voice content once, and then records the voice content for three consecutive times, the mobile phone may store three pieces of corresponding audio information in the audio stack. In addition, the interface 1101 displays a quantity "4" as a subscript, indicating that a quantity of audio information stored in the audio stack is 4.

In some embodiments of this application, the floating control 901 may be displayed in a manner of a sidebar.

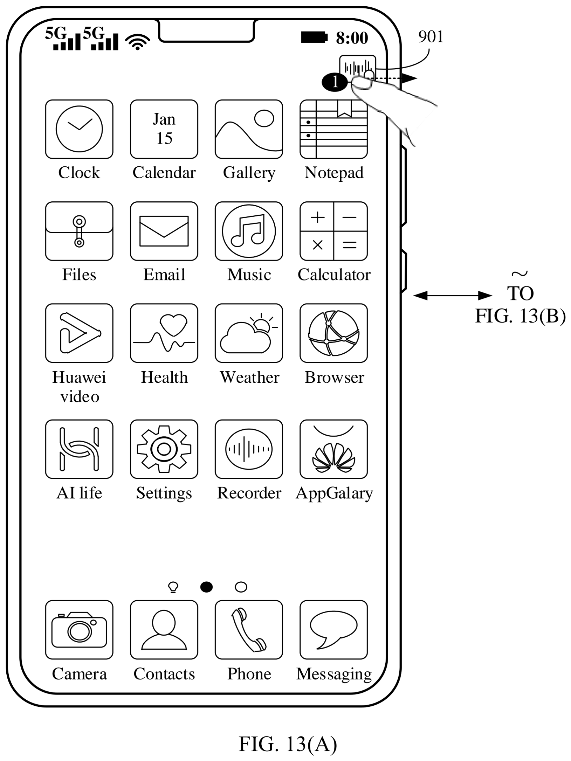

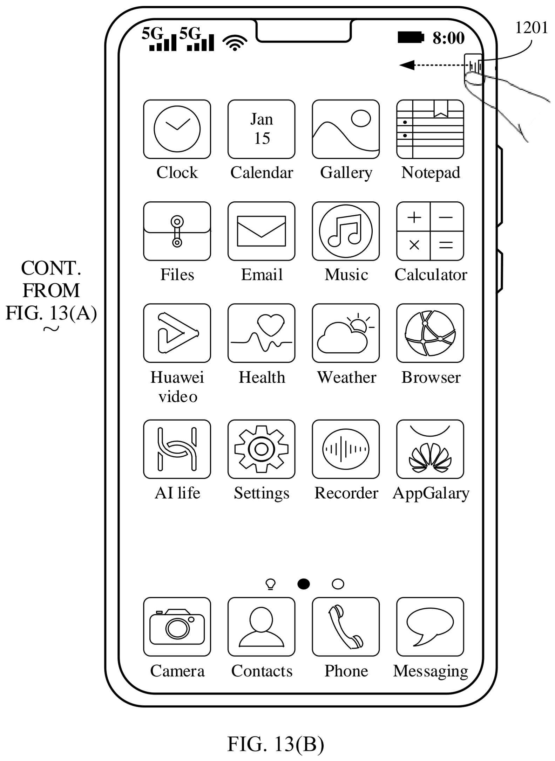

In an implementation, with reference to FIG. 13(A), the mobile phone detects an operation of switching the floating control 901 to the sidebar for display, and the mobile phone displays an interface shown in FIG. 13(B), in other words, the original floating control 901 changes to a sidebar 1201. The sidebar 1201 may be a part of content of the floating control 901 (or referred to as the incompletely displayed floating control 901) or an indicator of another type. For example, the switching operation may be that the user drags the floating control 901 to a frame of the screen after touching and holding the floating control 901, or the user slides the floating control 901 toward a side of the screen, or the user makes a sliding gesture toward a side of the screen, a voice instruction, or an operation instruction of another type.

It can be understood that the sidebar 1201 basically does not block content of the current interface, which helps the user view the content of the current interface. When the screen is large, even if the floating control 901 is switched to another state for display, information such as content of the audio information and/or the quantity of audio information may continue to be displayed.

In another possible implementation, when detecting that the user does not operate the floating control 901 within the preset duration, the mobile phone may alternatively automatically switch the floating control 901 to the sidebar 1201 for display. A specific display manner of the audio stack is not limited in embodiments of this application.

In some embodiments of this application, the mobile phone may receive at least one piece of first audio information, where the first audio information is recorded after the headset detects the first trigger operation. The mobile phone may further display the first floating window corresponding to the audio stack, where the first floating window includes the at least one piece of first audio information.

To be specific, the user may operate the displayed floating control to expand the first floating window of the audio stack, to view details of the audio information stored in the audio stack, and perform an operation on the audio information in the audio stack, for example, listening to and editing the audio information in the audio stack.

In an implementation, the mobile phone detects a third trigger operation performed by the user on the floating control 901, and displays a first floating window 902 corresponding to the audio stack. The first floating window 902 includes the at least one piece of first audio information, and the first floating window 902 may further display an audio box used to represent the first audio information and audio duration corresponding to the first audio information. Then, the mobile phone may detect a fourth trigger operation performed by the user on the audio box, mark the audio box and play voice content corresponding to the first audio information, so that the user can listen to the recorded audio information after recording, and perceive a specific location of the first audio information in a playing process.

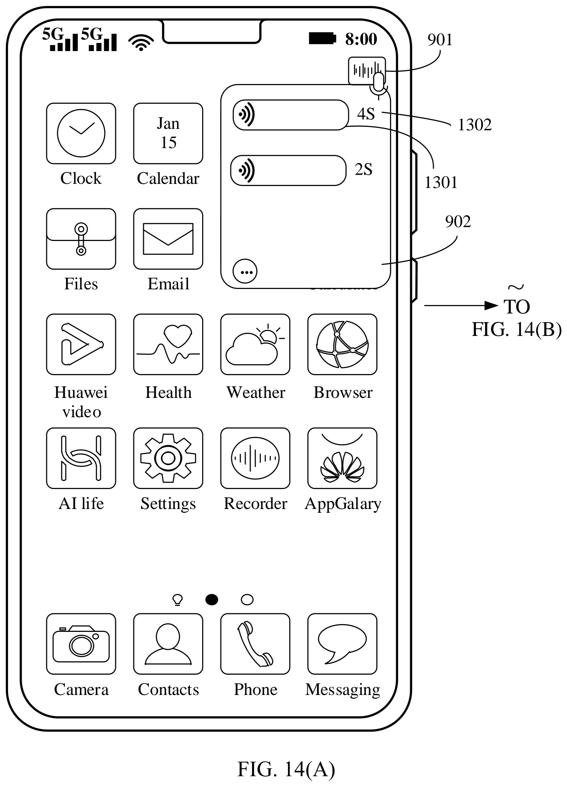

For example, with reference to FIG. 14(A), the user performs a tap operation on the floating control 901, and when detecting the tap operation performed by the user on the floating control 901, the mobile phone displays the first floating window 902 corresponding to the audio stack. The first floating window 902 includes an audio box 1301 used to represent the first audio information and audio duration 1302 corresponding to the first audio information. The audio duration is 4s. Then, the user performs a tap operation on the audio box 1301. The mobile phone detects the tap operation performed by the user on the audio box 1301, darkens the audio box, and plays the first audio information corresponding to the audio box 1301.

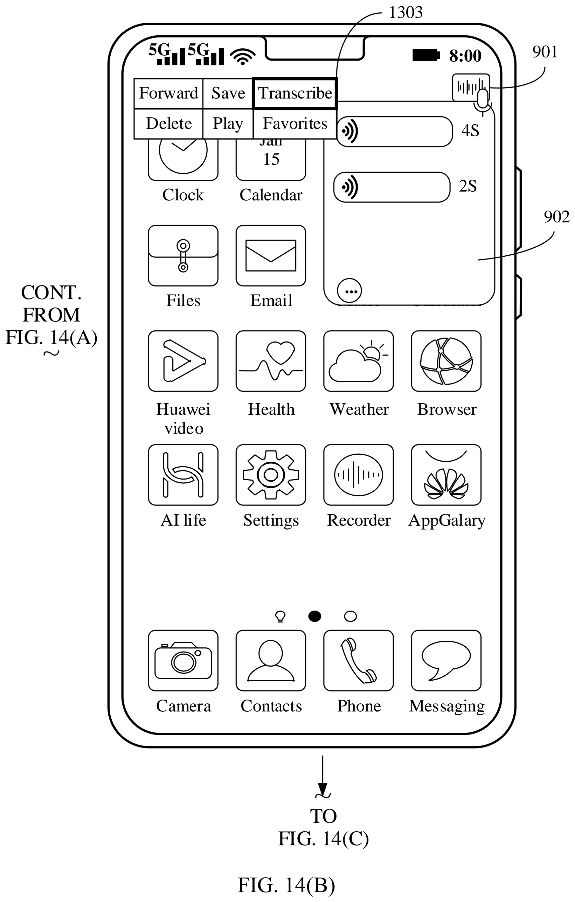

In some embodiments of this application, with reference to FIG. 14(B), the mobile phone detects a fifth trigger operation performed by the user on the audio box, and displays a first window 1303 corresponding to the first audio information. The first window 1303 includes a first function indicator of at least one shortcut function.

It may be understood that the first function indicator refers to a shortcut that appears after the fifth trigger operation performed by the user on the audio box, and is an entry for adding an editing function for the audio information in a quicker manner. For example, the first window displays function indicators such as Forward, Save, Transcribe, Delete, Play, and Favorites. The user may perform a trigger operation on the function indicator, so that the mobile phone performs a corresponding function on the audio information. When detecting a sixth trigger operation performed by the user on the first function indicator, the mobile phone performs an editing function corresponding to the first function indicator on the audio information.

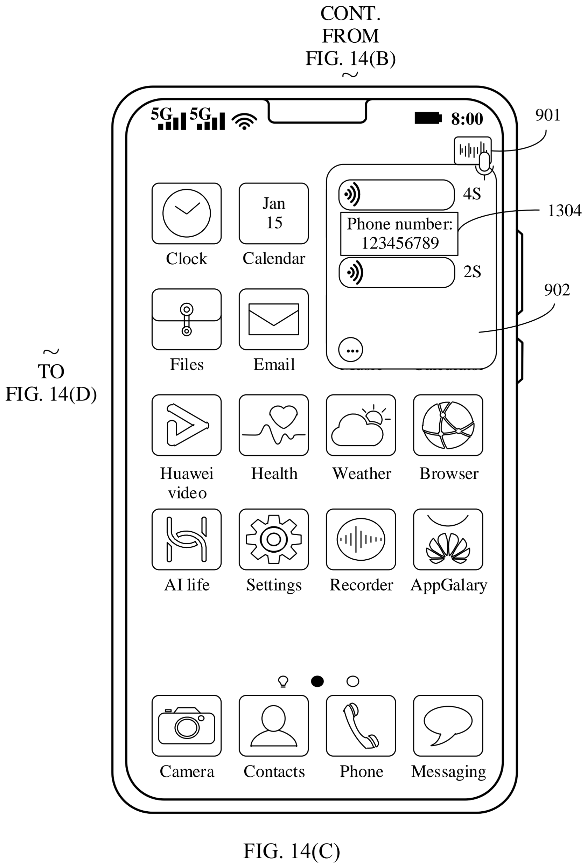

For example, with reference to FIG. 14(C), the user may perform a touch and hold operation on the function indicator "Transcribe". The mobile phone detects the touch and hold operation performed by the user on the function indicator "Transcribe", and displays the text box 1304 corresponding to the first audio information. The text box includes text content corresponding to the first audio information.

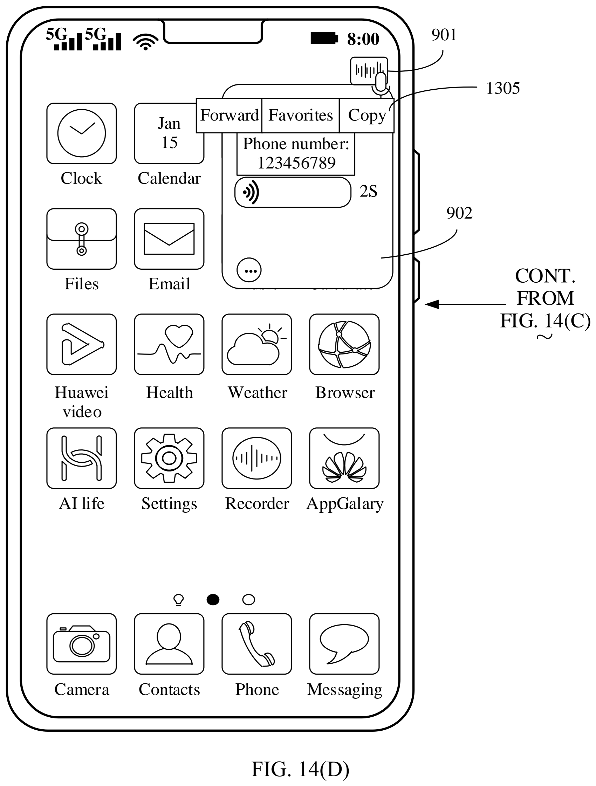

In some embodiments of this application, with reference to FIG. 14(D), the mobile phone detects a seventh trigger operation performed by the user on the text box, and displays a second window 1305 corresponding to the first audio information. The second window 1305 includes a second function indicator of the at least one shortcut function. For example, the second window displays function indicators such as Copy, Add to favorites, and Forward. Therefore, the user may continue to perform further editing processing on the text content corresponding to the first audio information.

The third trigger operation, the fourth trigger operation, the fifth trigger operation, the sixth trigger operation, and the seventh trigger operation may be a same operation, or may be different operations. The trigger operations may include a touch and hold operation, a tap operation, a double-tap operation, a pressure sensing operation, a voice operation, and the like.

It can be learned that, in this embodiment of this application, not only the audio information can be quickly recorded, but also the recorded audio information can be listened to and edited, for example, various editing operations such as Transcribe, Forward, Copy, and Delete. Without relying on the headset application to synchronize the audio information stored in the headset to the mobile phone, the user can directly listen to and edit the audio information through the audio stack in the mobile phone. This improves interaction efficiency between the user and the electronic device and operation convenience.

In some embodiments of this application, the mobile phone may share one piece of first audio information to one or more applications. In other words, when displaying the first floating window on a target interface of at least one target application, the mobile phone may detect an operation of dragging the first audio information to the target interface, and share the first audio information to the at least one target application. Any application on the mobile phone can invoke the audio stack. In addition, an audio entry corresponding to the audio stack in the first floating window may be selected for application, or may be continuously applied for a plurality of times. The user may select one piece of first audio information in the audio stack, and share the first audio information to an application in the mobile phone. There may also be one or more applications.

Specifically, the target application includes a first application. The mobile phone detects a first operation on the first application, and displays the first interface, where the first floating window is displayed on the first interface in a floating manner. Then, the mobile phone detects an operation of dragging the first audio information in the first floating window to the first interface, and shares the first audio information to the first application.

To be specific, when the first floating window is displayed on the first interface in a floating manner, the user may directly drag the first audio information in the first floating window to the first application, to insert the first audio information into an interface of the first application.

The user may drag one piece of audio information at a time. For example, the mobile phone detects an operation of touching and holding the audio information by the user, and controls an audio frame corresponding to the audio information to float. Further, the user continues to drag the audio information out of the first floating window of the audio stack until the audio information is dragged to a target location of the first application.

In some embodiments of this application, the target application may be a first-type application, and the first-type application includes an SMS application, an email application, a browser application, an instant messaging application, and the like.

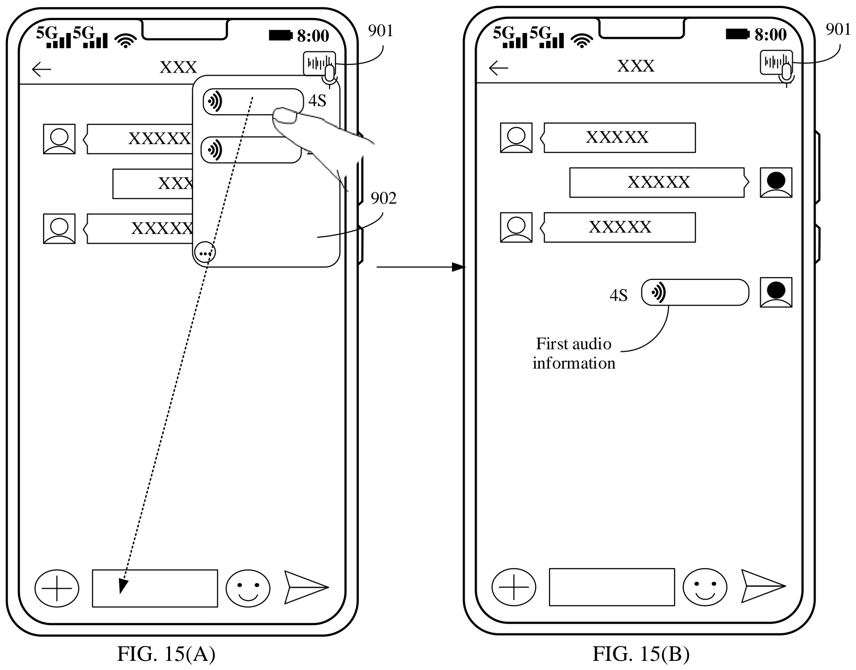

For example, with reference to FIG. 15(A), a dialog interface corresponding to the instant messaging application is displayed in the mobile phone. When the audio information is dragged to a to-be-input area of the dialog interface, the first audio information may be directly inserted into the to-be-input area, or the first audio information may be directly sent. When the mobile phone detects that the user directly drags the audio box corresponding to the first audio information to the to-be-input area and releases the audio box, the mobile phone sends the first audio information corresponding to the audio box, and displays an interface shown in FIG. 15(B).

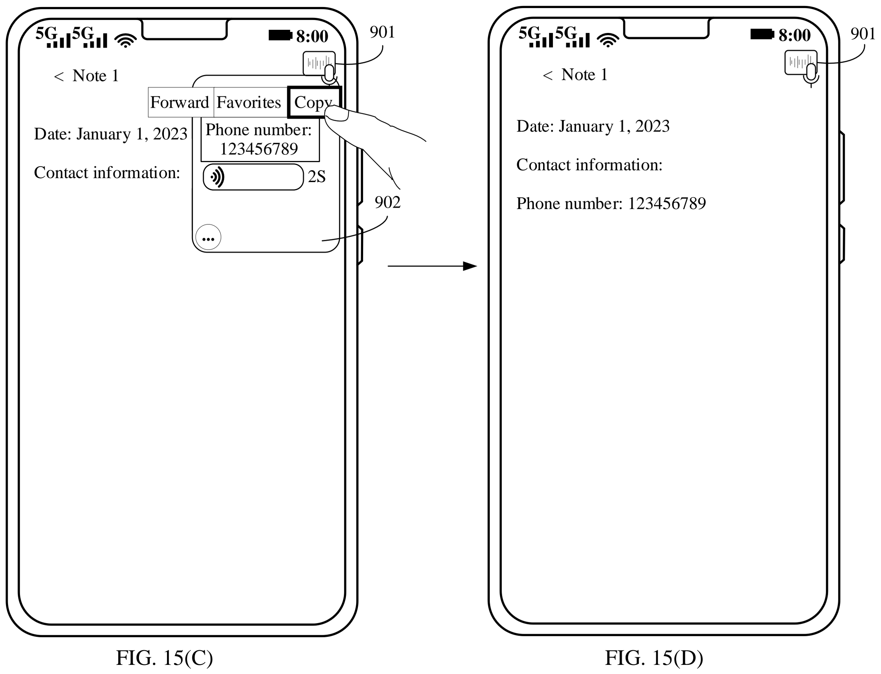

In some other embodiments of this application, the target application may alternatively be a second-type application, and the second-type application includes a Calendar application, a Contacts application, a Notepad application, a Navigation application, and the like. With reference to FIG. 15(C), a recording interface of the Notepad application is displayed in the mobile phone. Based on the foregoing content, the user may tap a copy function indicator, corresponding to the first audio information, in the second window. After detecting the tap operation on the copy function indicator, the mobile phone saves text content corresponding to the first audio information to a clipboard. Then, when detecting that the user performs a pasting operation on a recording interface of the Notepad application, the mobile phone displays text content corresponding to the first audio information on the recording interface, and displays an interface shown in FIG. 15(D).

In other words, the user may share the recorded text content corresponding to the first audio information to the target application.

For example, a recorded phone number is shared to the Contacts application.

For another example, recorded trip content is shared to the Calendar application.

For another example, recorded address information is shared to the Navigation application. The mobile phone may share the audio information to the target application in a forwarding sharing manner. The mobile phone may further share the text content corresponding to the audio information to the target application in a copying sharing manner. This is not specifically limited in embodiments of this application.

It can be learned that the user may share the first audio information to the application in a manner of dragging the first audio information from the first floating window. Alternatively, the user may share the text content corresponding to the first audio information to the application in a manner of copying or forwarding from the first floating window. In other words, in this embodiment of this application, the recorded audio information may be associated with each application, so that the recorded audio information can be used in each application. In addition, the user can quickly search for and edit the recorded audio information. This reduces operation procedures of the user in different applications.

In some embodiments of this application, the mobile phone may share a plurality of pieces of audio information to any one or more applications at a time. It may be understood that the audio stack in this embodiment of this application can take effect globally at a system level, so that the user can access the audio stack at any time and in any task, to implement quick access and use of input audio information. In an actual application, the user may select a plurality of pieces of first audio information in the first floating window, and share the plurality of pieces of first audio information to an application on the mobile phone.

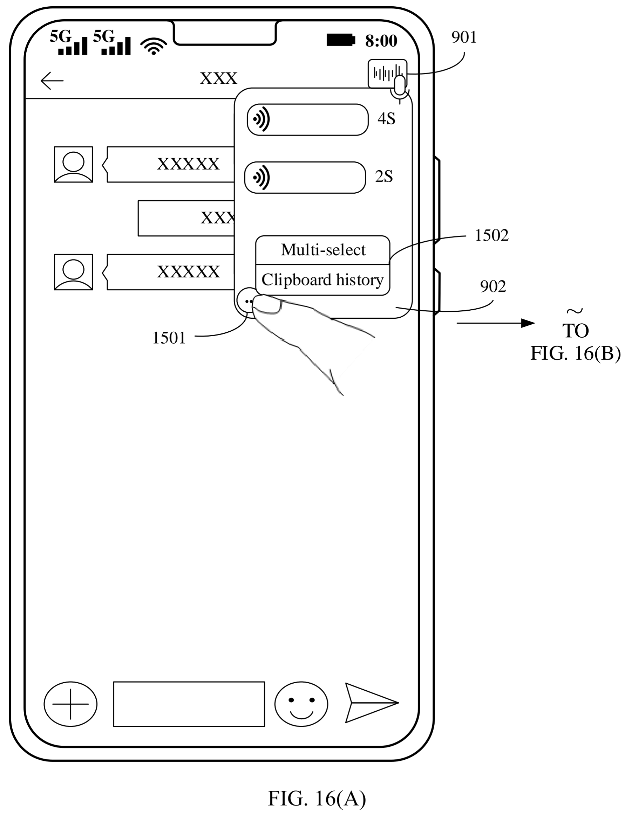

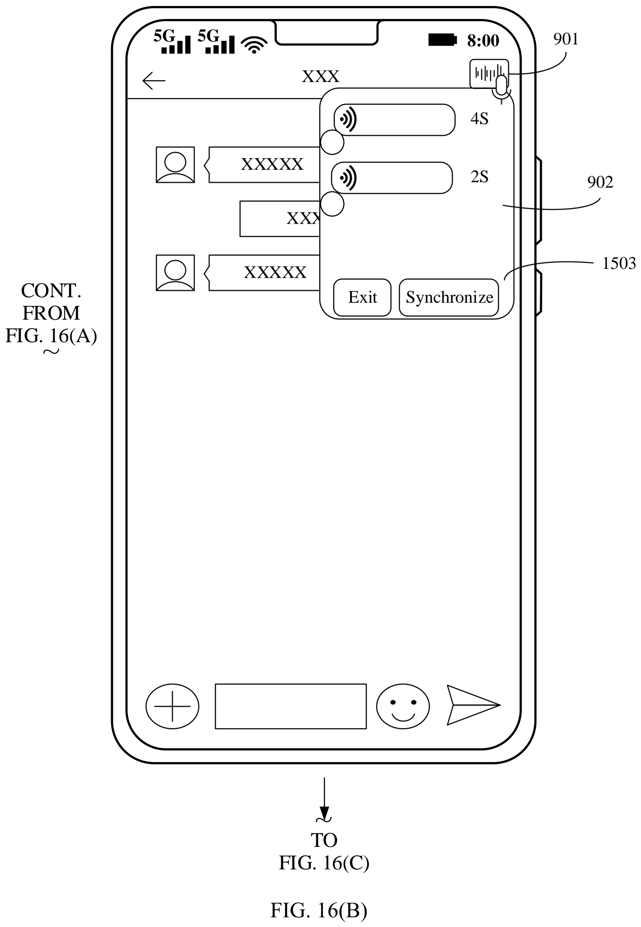

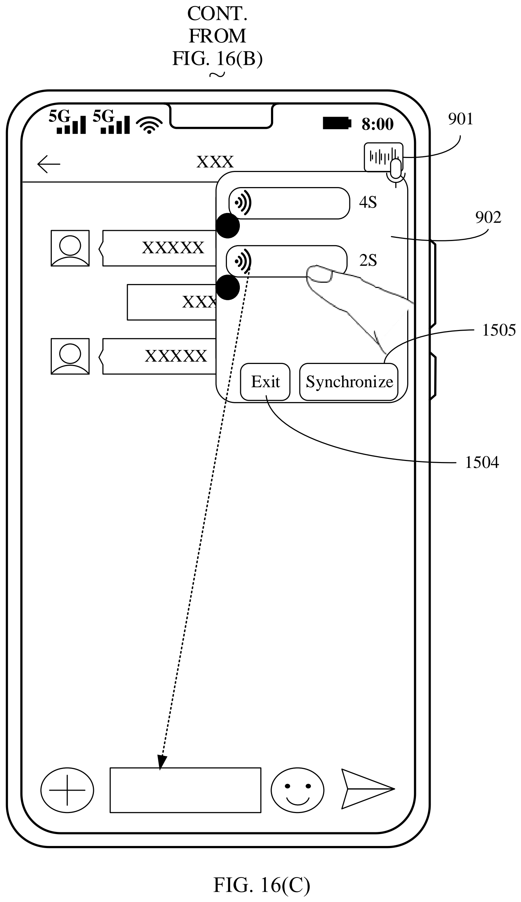

For example, with reference to FIG. 16(A), the first floating window 902 includes a target control 1501. The mobile phone detects that the user operates the target control, and displays a function menu 1502, where the function menu 1502 includes a Multi-select option and a Clipboard history option. The mobile phone detects that the user selects the Multi-select option, and the mobile phone displays a multi-select interface 1503 shown in FIG. 16(B). Each piece of first audio information on the multi-select interface 1503 corresponds to a check box. That is, the audio stack enters a multi-select mode. The user may select a plurality of pieces of first audio information, and the check box corresponding to the selected first audio information presents a selected state. Then, with reference to FIG. 16(C), the user presses and holds the plurality of pieces of selected first audio information, and drags the plurality of pieces of first audio information to a target location of the application.

In some embodiments of this application, the audio stack may provide a deletion function and a synchronization function.

Still with reference to FIG. 16(C), after the audio stack enters the multi-select mode, the first interface may further display an Exit control 1504 and a Synchronize control 1505. The user may delete the selected audio information from the audio stack by using the Exit control 1504. In addition, after the user operates the Exit control 1504, the mobile phone may further display a secondary confirmation pop-up window, to ask the user whether to confirm to delete the selected audio information. The user may further synchronize the selected audio information to another electronic device by using the Synchronize control 1505. In some examples, after the another electronic device receives the first audio information synchronized from the mobile phone, an audio stack of the another electronic device synchronizes the first audio information in the mobile phone.

In some embodiments of this application, the audio stack may further provide a function of a clipboard history. The clipboard history includes audio information copied and clipped by the mobile phone.

In some embodiments of this application, when the user starts to drag the audio box corresponding to the first audio information, or when the user drags the audio box corresponding to the first audio information out of a main interface of the audio stack, the mobile phone may temporarily hide the main interface of the audio stack, to prevent the main interface of the audio stack from blocking an interface of an application, so that the user can drag the first audio information to a target location of the application.

Then, when detecting that the user operates a target icon corresponding to the audio stack, the mobile phone resumes displaying of the floating control of the audio stack.

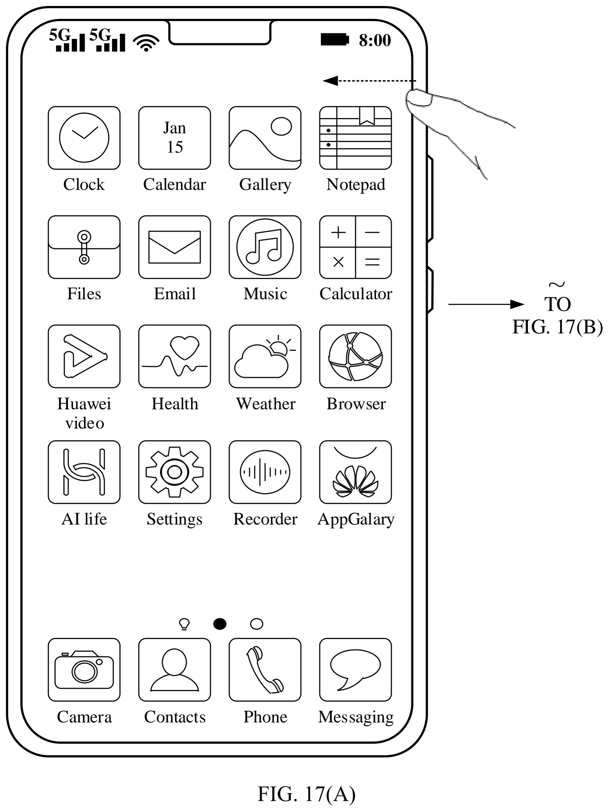

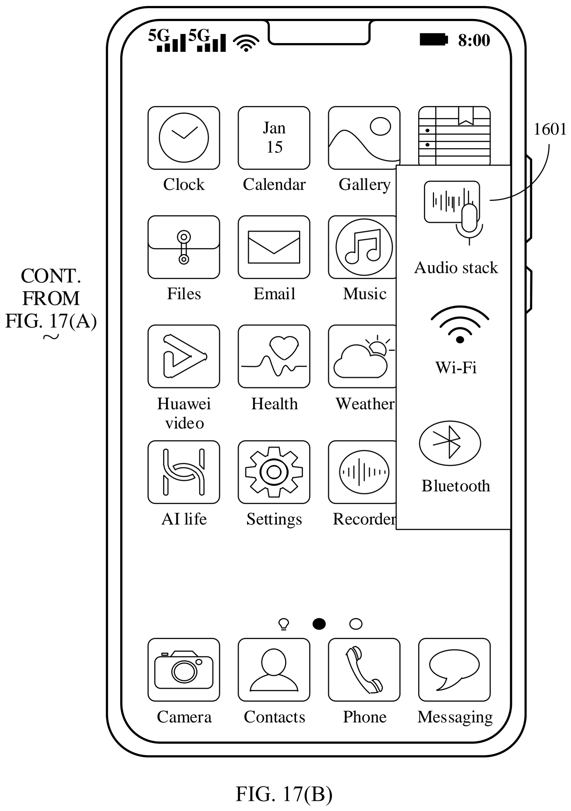

In an implementation, the mobile phone may arrange, on a sidebar, the target icon corresponding to the audio stack. With reference to FIG. 17(A), the mobile phone detects a user operation of sliding left and hovering on a right frame of the screen of the mobile phone, and displays a side function interface shown in FIG. 17(B). A sidebar 1601 is displayed on the side function interface. Further, the mobile phone detects a user operation on the target icon on the side functional interface, and resumes displaying of the main interface of the audio stack. The mobile phone may alternatively arrange, in a drop-down menu bar or on a left-most screen, the target icon corresponding to the audio stack.

It can be learned that, in this embodiment of this application, one or more pieces of audio information recorded by the user can be associated with different applications, and the audio information can be shared all applications at a time, to avoid a data loss caused after the user may accidentally exit the audio stack after sharing audio information. This simplifies user operations, improves efficiency of interaction between the user and the electronic device, and further improves user experience.

In some embodiments of this application, the mobile phone detects a second operation on at least one target object on the first interface, and displays the target object in the first floating window, where the target object includes one or more of picture information, text information, and the first audio information. Then, the mobile phone detects a third operation on a second application, and displays a second interface, where the first floating window is displayed on the second interface in a floating manner. Then, the mobile phone detects an operation of dragging the at least one target object in the first floating window to the second interface, and shares the target object to the second application. In other words, the mobile phone may not only store the audio information recorded by the user in the audio stack, but also store non-audio information such as picture information and text information in the first application in the audio stack, and certainly, may also store the audio information in the first application in the audio stack. In this case, the audio stack may be understood as an information transfer station.

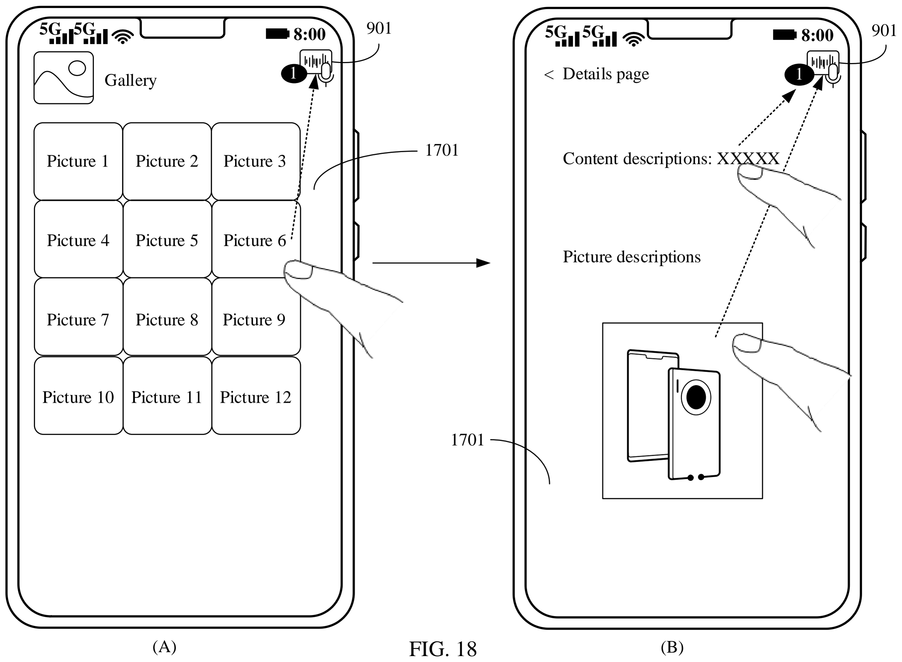

For example, with reference to (A) in FIG. 18, the mobile phone detects the first operation performed on an icon corresponding to the first application, and displays a first interface 1701. The first interface 1701 may be a picture interface in an album application (namely, the first application). The first interface 1701 may alternatively be a web page of a browser application (namely, the first application), a reading page of a document in a document application (namely, the first application), or the like. When the user wants to store a picture on the first interface 1701 in the audio stack, the user may first select the picture. Then, the user drags the picture to the floating control 901 corresponding to the audio stack. The mobile phone detects the second operation performed by the user on the picture, and stores the picture in the audio stack.

Similarly, with reference to (B) in FIG. 18, the first interface 1701 is a web page of the browser application (namely, the first application). The user may further select one or more of a picture, a text, or an audio in the web page, and drag the picture, the text, or the audio to the floating control 901 corresponding to the audio stack. In this way, picture information, text information, and audio information in the browser application are stored in the audio stack.

The second operation may include a drag (or referred to as drag and drop, drag, or the like) operation after touch and hold, an operation of quickly sliding in a preset direction after touch and hold, a shake operation, a double-finger sliding operation, and the like.

In some embodiments of this application, the mobile phone may not only share the audio information to the second application, but also share the image information and the text information in the first application to the second application.

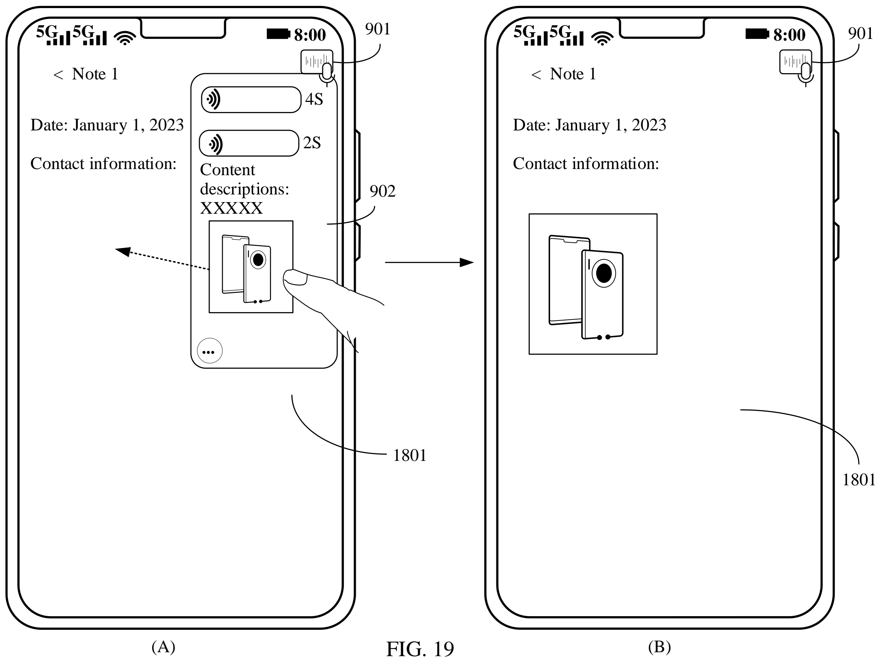

For example, the first application is a browser application, and the second application is a Notepad application. With reference to (A) in FIG. 19, the mobile phone detects the third operation performed on an icon corresponding to the second application, and displays a second interface 1801. The first floating window is displayed on the second interface 1801 in a floating manner. The first floating window 902 includes the audio information recorded by the user, and the picture information and the text information in the browser application. The user may directly drag the picture information and/or the text information in the first floating window 902 to the Notepad application. The mobile phone detects a drag operation of the user, inserts the picture information and/or the text information in the browser application into an interface of the Notepad application, and displays an interface shown in (B) in FIG. 19.

It can be learned that, in this embodiment of this application, all or a part of the selected content in the first floating window may be shared to the application on the mobile phone, for example, one or more of the audio information, the text information, and the picture information in the first floating window. In other words, in this embodiment of this application, not only different types of information can be stored by using the audio stack, but also the stored information can be associated with different applications, to implement an information sharing process. This simplifies user operations and improves user operation efficiency.

In some embodiments of this application, the mobile phone exits the audio stack after receiving an exit operation that the user indicates to exit the audio stack. The mobile phone may delete the audio information and/or the picture information and/or the text information that are/is stored before the mobile phone exits the audio stack.

In an implementation, the mobile phone may store, in historical data of the audio stack, audio information and/or picture information and/or text information that are/is stored before the mobile phone exits the audio stack this time.

In an implementation, the mobile phone may store, in historical data of the audio stack, audio information and/or picture information and/or text information that are/is stored before the mobile phone activates the audio stack this time.

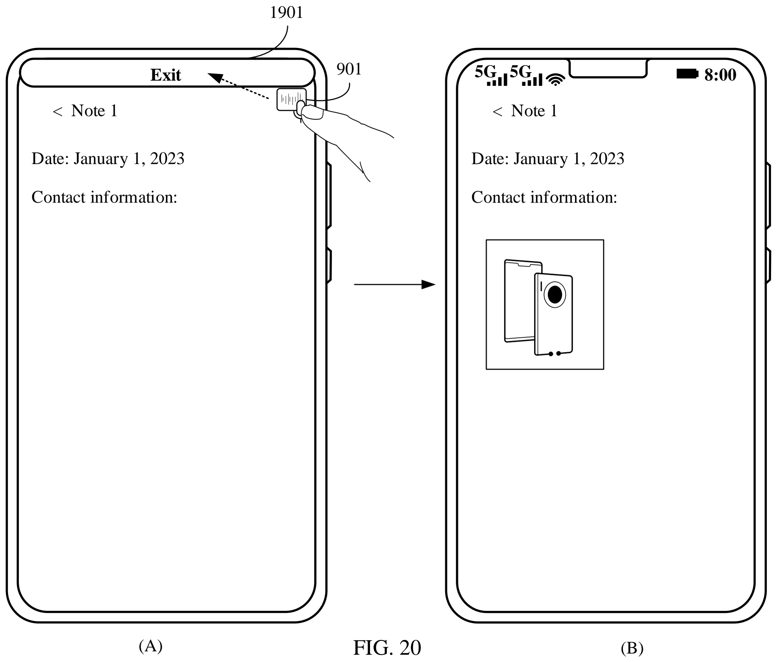

For example, on an interface shown in (A) in FIG. 20, when the mobile phone detects that the user performs a drag operation on the floating control 901, the mobile phone displays an Exit control 1901. For another example, when the mobile phone detects that duration in which the user touches and holds the floating control 901 reaches preset duration and is less than preset duration, the mobile phone displays the Exit control 1901, so that the user indicates the mobile phone to exit the audio stack. Then, a finger of the user does not leave the screen. Further, after it is detected that the user drags the floating control 901 to the Exit control 1901 and releases the control, the mobile phone exits the audio stack. Then, an interface shown in (B) in FIG. 20 is displayed, and the floating control 901 disappears.

For another example, when the mobile phone detects that the user performs a double-tap operation on the floating control 901, the floating control 901 displays a dynamic special effect of a preset pattern. For example, the floating control 901 displays a bubble gradient effect, changes from small bubbles to large bubbles, and then changes from large bubbles to disappearance of bubbles. Finally, the floating control 901 disappears. The exit operation on the audio stack may also be a voice operation, a dual-finger operation, a sliding operation toward a specific direction, or the like.

The foregoing content is a scenario of audio processing between a first electronic device and a second electronic device provided in this embodiment of this application. The first electronic device in this embodiment of this application may further perform audio processing with a plurality of electronic devices. The following describes in detail a scenario in which the first electronic device performs audio processing with at least one target electronic device.

In some embodiments of this application, when a communication connection is established between the first electronic device and the at least one target electronic device, the first electronic device may serve as a central device, and synchronously store audio information recorded by the user in an audio stack of each electronic device. In addition, if the user changes audio information in an electronic device, the central device may synchronize a change result of the audio information to another electronic device, to implement synchronization of audio information in each electronic device.

The target electronic device may include the second electronic device and a third electronic device. An example is still used in which the first electronic device is a headset, the second electronic device is a mobile phone, and the third electronic device is a tablet computer.

For example, when a communication connection is established between the headset and the mobile phone and between the headset and the tablet computer, the headset may store the audio information recorded by the user in audio stacks of the mobile phone and the tablet computer. Then, if the user deletes the audio information from the audio stack of the mobile phone, the headset may send a deletion state of the audio information to the tablet computer, and indicate the tablet computer to delete the audio information, to implement status synchronization of audio information in audio stacks of different target electronic devices.

It should be noted that a process in which the headset stores the audio information recorded by the user in the audio stack of the tablet computer is similar to the foregoing interaction process between the headset and the mobile phone, and details are not described herein again.

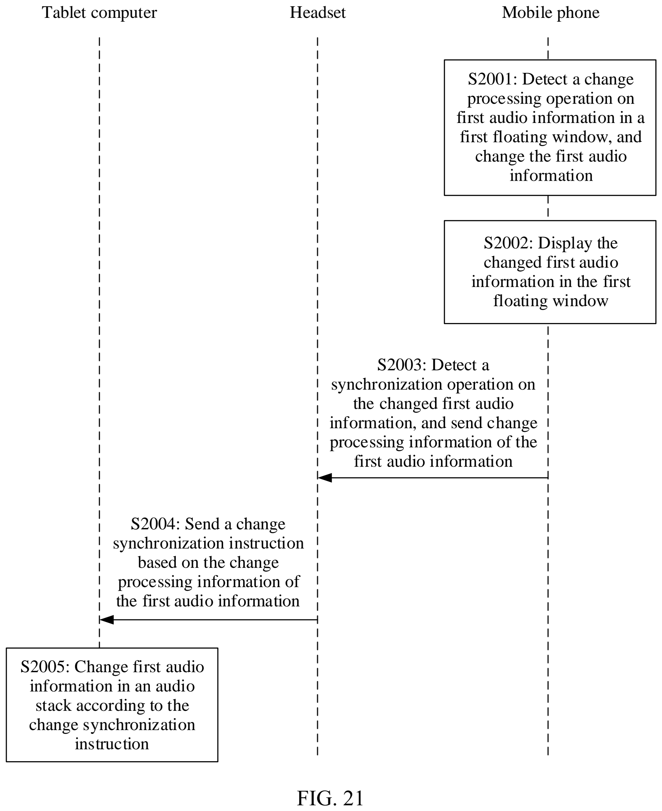

FIG. 21 is an interaction diagram showing audio information synchronization according to an embodiment of this application. As shown in FIG. 21, the method may include the following steps S2001 to S2005.

S2001: A mobile phone detects a change processing operation on first audio information in a first floating window, and changes the first audio information.

The change processing operation includes a deletion operation on the first audio information, a transcribing operation on the first audio information, or an editing operation on a text corresponding to the first audio information.

S2002: The mobile phone displays changed first audio information in the first floating window.

S2003: The mobile phone detects a synchronization operation on the changed first audio information, and synchronizes change processing information of the first audio information to a headset.

S2004: The headset sends a change synchronization instruction to a tablet computer based on the change processing information of the first audio information.

The change synchronization instruction instructs the tablet computer to change first audio information in an audio stack based on the change processing information of the first audio information, so that the audio information in the audio stack of the tablet computer is consistent with the audio information in the audio stack of the mobile phone.

Specifically, a synchronization processing module of the headset sends the change synchronization instruction to the tablet computer based on the change processing information of the first audio information, so that the tablet computer changes the first audio information in the audio stack according to the change synchronization instruction.

S2005: The tablet computer changes the first audio information in the audio stack according to the change synchronization instruction.

In an implementation, generally, in a process in which the headset is connected to the mobile phone and the tablet computer, a user sets one of the mobile phone and the tablet computer as a primary device corresponding to the headset. It may be understood that the primary device is an active device currently used when the user wears the headset.

For example, in FIG. 14(A) to FIG. 14(D), the primary device currently used by the user is the mobile phone, and the user may edit the audio information in the audio stack of the mobile phone. Still with reference to FIG. 14(B), the mobile phone detects a trigger operation performed by the user on a deletion function indicator, and deletes corresponding audio information. Further, the mobile phone changes the audio information in the audio stack.

Then, still with reference to FIG. 16(C), the user controls the audio stack to enter a multi-select mode, and when detecting that the user performs a synchronization operation on a Synchronize control 1505, the mobile phone may send the change processing information of the first audio information to the headset. The change processing information may include a change result corresponding to the first audio information or a change processing instruction corresponding to the first audio information. For example, the change result is used to represent that the audio information has been deleted, and the change processing instruction instructs to delete the first audio information.

Then, the headset generates the change synchronization instruction based on the change processing information, and sends the change synchronization instruction to the tablet computer. The change synchronization instruction may instruct the tablet computer to change the audio information in the audio stack of the tablet computer. In an example, the change synchronization instruction may also include a change result or a change processing instruction, so that the tablet computer changes the audio information in the audio stack of the tablet computer.

Finally, the tablet computer deletes corresponding audio information according to the change synchronization instruction. In this way, the headset can synchronize the recorded audio information between a plurality of target electronic devices, and can also synchronize a change process corresponding to the audio information.

In another possible implementation, the headset may alternatively automatically change the primary device. Generally, after the headset is connected to the two electronic devices, a sound of only one electronic device can be played. In this way, the headset may pre-configure a corresponding sound output priority. For example, a priority of a call is higher than priorities of playing an audio and playing a video, and the priorities of playing an audio and playing a video are the same.

For example, when the user plays an audio by using the tablet computer and listens to the audio by using the headset, the primary device corresponding to the headset is the tablet computer. Then, if the mobile phone of the user receives a call request, and the user uses the mobile phone to make a call, in a process in which the user makes a call by using the mobile phone, the headset may automatically change the primary device from the tablet computer to the mobile phone.

It may be understood that, when the headset automatically changes the primary device, the changed primary device may continue to perform the foregoing audio information synchronization process after the audio information changes, and details are not described herein again.

It should be noted that, in the foregoing descriptions, deletion of audio information is merely used as an example of a change to audio information, and any editing operation performed by the user on the audio information may be construed as the change to audio information.

In some embodiments of this application, the user may further select an electronic device for synchronizing audio information. Based on the foregoing content, after the audio information is changed, when detecting a synchronization operation, the mobile phone may send the change processing information and a device identifier of a to-be-synchronized device to the headset. The headset generates a change synchronization instruction based on the change processing information and the device identifier of the to-be-synchronized device, and synchronously sends the change to the electronic device corresponding to the device identifier.

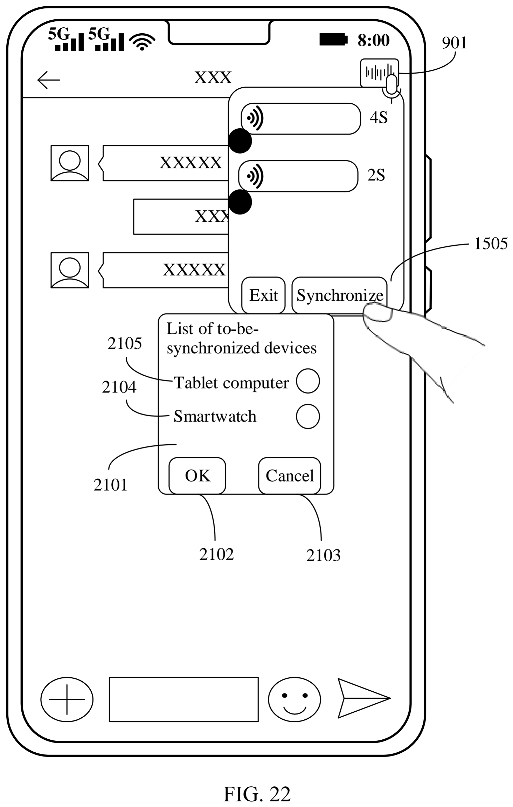

For example, an example in which the mobile phone deletes audio information and the audio stack enters a multi-select mode continues to be used. The mobile phone may detect a trigger operation performed by the user on the Synchronize control 1505, and display an interface 2101 in FIG. 22. The interface 2101 includes a list of to-be-synchronized devices, and the list of to-be-synchronized devices includes a device control corresponding to at least one to-be-synchronized device, an OK control 2102, and a Cancel control 2103. For example, device controls include a device control 2104 corresponding to a smartwatch and a device control 2105 corresponding to the tablet computer.

It may be understood that the to-be-synchronized device is an electronic device that establishes a communication connection to the headset and that is to synchronize audio information. The user may select, from the list of to-be-synchronized devices, an electronic device that needs to be synchronized, and tap an OK control, to trigger a synchronization process of the audio information.

In some embodiments of this application, after detecting the synchronization operation on the changed first audio information, when the mobile phone is associated with the tablet computer, the mobile phone may directly synchronize the change processing information of the first audio information to the tablet computer. In other words, the mobile phone and the tablet computer may interact with each other in a manner of a hyper terminal, so that the tablet computer changes the first audio information in the audio stack based on the change processing information.

It can be learned that, in this embodiment of this application, a recording function can be triggered on a headset side, and recorded audio information can be stored in a plurality of other electronic devices. In addition, the audio information may be used in the plurality of other electronic devices that establish a communication connection to the headset, and a change process of the audio information in the plurality of other electronic devices is synchronized.

In this way, the information stored in the audio stack may be associated with a plurality of target electronic devices, and the change process may be synchronized between the plurality of target electronic devices, without a need for the user to perform a repeated change operation on the plurality of target electronic devices. This simplifies a user operation and improves operation efficiency and convenience of the user. Further, the recorded audio information can be transferred between the plurality of target electronic devices. This improves user experience.

In some embodiments of this application, when the headset does not establish a communication connection to a target electronic device, the headset may store audio information recorded by the user. Then, when detecting that a communication connection is established with another electronic device, the headset directly synchronizes the recorded audio information to an audio stack of the another electronic device.

It may be understood that, when the headset is connected to a plurality of target electronic devices, the headset may be used as a center to perform audio information synchronization. The recorded audio information may be stored in a storage module of the headset, and the recorded audio information may be synchronized to the target electronic device by using a multi-device connection processing module and a synchronization processing module of the headset.

Specifically, when the headset does not establish the communication connection to the target electronic device, the headset detects a first trigger operation, obtains second audio information, and stores the second audio information in the storage module. When the multi-device connection processing module of the headset detects that the communication connection is established with the target electronic device, the synchronization processing module sends a first synchronization instruction and the recorded second audio information to the target electronic device. The first synchronization instruction instructs the target electronic device to store the second audio information in a storage area specified by an audio stack. There may be one or more target electronic devices.

Then, when the mobile phone does not establish a communication connection to the headset, if detecting that the mobile phone establishes the communication connection to the headset, the mobile phone receives the first synchronization instruction and the second audio information that are sent by the headset. In addition, the mobile phone stores, according to the first synchronization instruction, the second audio information in the storage area specified by the audio stack.

In some embodiments of this application, after receiving the synchronization instruction, the target electronic device may further output second prompt information, where the second prompt information indicates that the audio information sent by the headset has been stored. The second prompt information further corresponds to a prompt control, and the prompt control may be implemented as a text "Audio information synchronized".

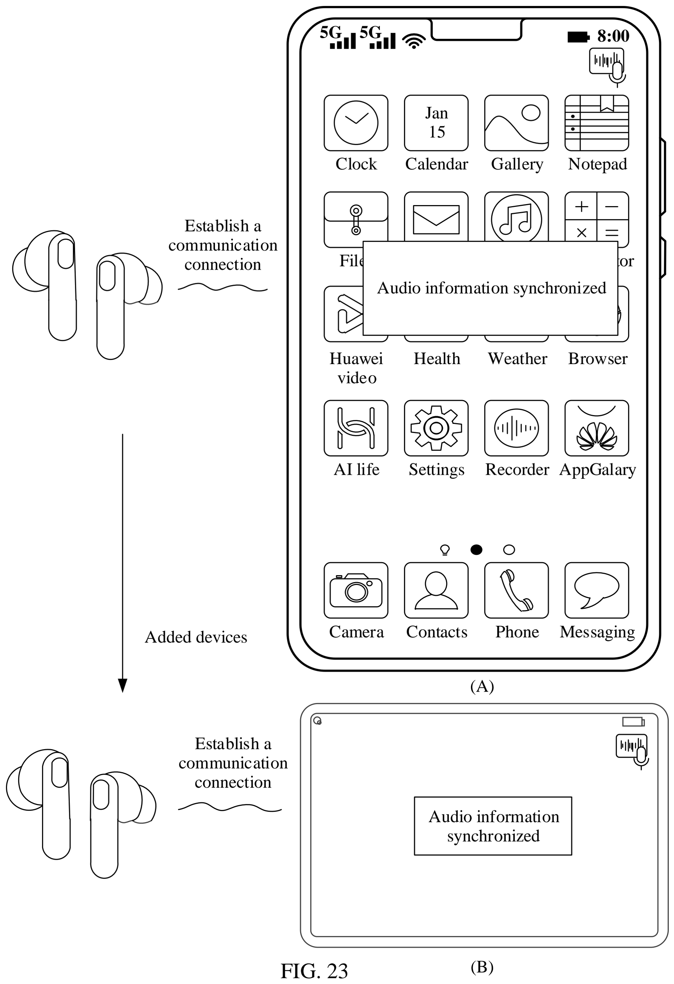

For example, with reference to (A) in FIG. 23, when detecting that communication is established with the mobile phone, the headset sends the first synchronization instruction to the mobile phone. According to the first synchronization instruction, the mobile phone stores the second audio information and displays a prompt window, where the prompt window includes a prompt control.

With reference to (B) in FIG. 23, when detecting that communication is established with the tablet computer, the headset sends the first synchronization instruction and the second audio information to the mobile phone. According to the first synchronization instruction, the tablet computer stores the second audio information and displays a prompt window, where the prompt window includes a prompt control.

In an implementation, when the headset detects that a communication connection is established with a fourth electronic device, the fourth electronic device and the target electronic device may automatically establish a communication connection in a manner of a hyper terminal, and then exchange data, if the fourth electronic device and the target electronic device are mutually trusted devices, for example, the fourth electronic device and the target electronic device both log in to a same account, for another example, the fourth electronic device and the target electronic device are located in a same communications network, for another example, a login account of the fourth electronic device and a login account of the target electronic device belong to a same group (for example, a same family account), for another example, the fourth electronic device and the target electronic device directly establish a Wi-Fi P2P connection. The manner of a hyper terminal means that capabilities of all electronic devices may be managed, scheduled, and integrated in a unified manner according to a service requirement, to exhibit a service, so that fast connection, capability mutual assistance, resource sharing, and the like can be implemented between different electronic devices. It should be noted that, the fourth electronic device may also be the foregoing third electronic device, namely, the tablet computer.

That is, after the headset detects that the communication connection is established with the mobile phone, the headset may send the first synchronization instruction and the second audio information to the mobile phone. Then, after the headset detects that the communication connection is established with to the tablet computer, the mobile phone may generate the second synchronization instruction according to the first synchronization instruction, and send the second synchronization instruction and the second audio information to the tablet computer, to synchronize the second audio information in the headset to the mobile phone and the tablet computer.

In another implementation, when the headset detects that the headset establishes communication connections to the plurality of target electronic devices, if the plurality of target electronic devices all log in to different accounts, the headset may separately send a synchronization instruction to the plurality of target electronic devices, to synchronize locally stored audio information to the plurality of target electronic devices.

It can be learned that, in this embodiment of this application, when no communication connection is established with another electronic device, the headset may perform a recording process and store audio information recorded by the user. Then, when detecting that the communication connection is established with the another electronic device, the headset synchronizes the stored audio information to the another electronic device, to avoid a case in which data is lost when the user does not establish a communication connection between the headset and the another electronic device, without a need for the user to perform a synchronization operation on the audio information. In this way, the audio information can be recorded once, and the plurality of electronic devices synchronize the audio information. In addition, the audio information may be changed only once, to implement synchronous change of the audio information in the plurality of electronic devices. This improves user experience.

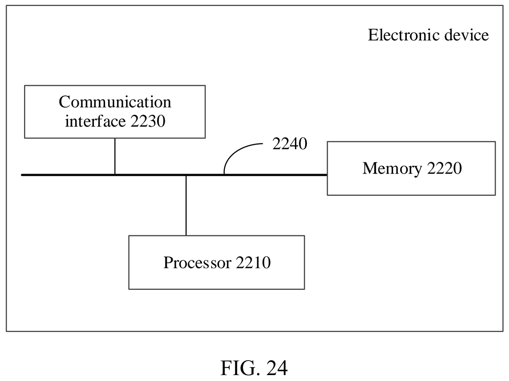

An embodiment of this application further provides an electronic device, for example, the electronic device may be the wireless headset, the mobile phone, or the tablet computer. As shown in FIG. 24, the electronic device may include one or more processors 2210, a memory 2220, and a communication interface 2230.

The memory 2220 and the communication interface 2230 are coupled to the processor 2210. For example, the memory 2220 and the communication interface 2230 may be coupled to the processor 2210 through a bus 2240.

The communication interface 2230 is configured to perform data transmission with another device. The memory 2220 stores computer program code. The computer program code includes computer instructions, and when the computer instructions are executed by the processor 2210, a wearable device is caused to perform the wearing detection method in embodiments of this application.

The processor 2210 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content of the present disclosure. The processor may be a combination of processors implementing a computing function, for example, a combination of one or more microprocessors, or a combination of the DSP and a microprocessor.

The bus 2240 may be a peripheral component interconnect (Peripheral Component Interconnect, PCI) bus, an extended industry standard architecture (Extended Industry Standard Architecture, EISA) bus, or the like. The bus 2240 may be classified into an address bus, a data bus, a control bus, and the like. For ease of representation, only one thick line is used to represent the bus in FIG. 24, but this does not mean that there is only one bus or only one type of bus.

An embodiment of this application further provides an interaction system. The interaction system includes a first electronic device and a second electronic device.

The first electronic device detects a first trigger operation, and sends at least one piece of recorded first audio information to the second electronic device.

The second electronic device receives the at least one piece of first audio information.

The second electronic device displays a first window corresponding to an audio processing service, where the first window includes the at least one piece of first audio information.

When displaying the first window on a target interface of at least one target application, the second electronic device detects an operation of dragging the first audio information in the first window to the target interface, and shares the first audio information to the at least one target application.

An embodiment of this application further provides a computer-readable storage medium. The computer storage medium stores computer program code. When the processor executes the computer program code, an electronic device performs related method steps in the foregoing method embodiments.

An embodiment of this application further provides a computer program product. When the computer program product runs on a computer, the computer is caused to perform related method steps in the foregoing method embodiments.

The electronic device, the computer storage medium, or the computer program product provided in this application are configured to perform the corresponding method provided above. Therefore, for beneficial effects that can be achieved by the electronic device, the computer storage medium, or the computer program product, refer to the beneficial effects in the corresponding methods provided above. Details are not described herein again.

The foregoing descriptions about implementations allow a person skilled in the art to clearly understand that, for the purpose of convenient and brief description, division into the foregoing functional modules is used as an example for illustration. In an actual application, the foregoing functions can be allocated to different functional modules and implemented based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An audio processing method, applied to a second electronic device, wherein the method comprises:
when a communication connection is established with a first electronic device, receiving at least one piece of first audio information, wherein the first audio information is recorded after the first electronic device detects a first trigger operation;
displaying a first window corresponding to an audio processing service, wherein the first window comprises the at least one piece of first audio information; and
when displaying the first window on a target interface of at least one target application, detecting an operation of dragging the first audio information to the target interface, and sharing the first audio information to the at least one target application.

2. The method according to claim 1, wherein the target application comprises a first application, and the first window is a first floating window; and when displaying the first window on the target interface of the at least one target application, detecting the operation of dragging the first audio information to the target interface, and sharing the first audio information to the at least one target application comprises:
detecting a first operation on the first application, and displaying a first interface, wherein the first floating window is displayed on the first interface in a floating manner; and
detecting an operation of dragging the first audio information in the first floating window to the first interface, and sharing the first audio information to the first application.

3. The method according to claim 2, wherein the method further comprises:
detecting a second operation on at least one target object on the first interface, and displaying the target object in the first floating window, wherein the target object comprises one or more of picture information, text information, and the first audio information;
detecting a third operation on a second application, and displaying a second interface, wherein the first floating window is displayed on the second interface in a floating manner; and
detecting an operation of dragging the at least one target object in the first floating window to the second interface, and sharing the target object to the second application.

4. The method according to claim 2 or 3, wherein the method further comprises:
detecting a change processing operation on the first audio information in the first floating window, and changing the first audio information, wherein
the change processing operation comprises a deletion operation on the first audio information, a transcribing operation on the first audio information, or an editing operation on a text corresponding to the first audio information;
displaying the changed first audio information in the first floating window; and
detecting a synchronization operation on the changed first audio information, and synchronizing change processing information of the first audio information to the first electronic device.

5. The method according to claim 4, wherein the method further comprises:
after detecting the synchronization operation on the changed first audio information, during association with a third electronic device, synchronizing the change processing information of the first audio information to the third electronic device, so that the third electronic device changes first audio information in an audio processing service based on the change processing information.

6. The method according to any one of claims 1 to 5, wherein displaying the first window corresponding to the audio processing service comprises:
receiving a first instruction sent by the first electronic device, wherein the first instruction instructs to store the first audio information in a storage area specified by the audio processing service; and
after receiving the first instruction, displaying the first window corresponding to the audio processing service; and
after receiving the at least one piece of first audio information, the method further comprises:
storing the at least one piece of first audio information in the storage area specified by the audio processing service.

7. The method according to claim 6, wherein after receiving the first instruction, displaying the first window corresponding to the audio processing service comprises:
after receiving the first instruction, displaying a first control corresponding to the audio processing service; and
detecting a fourth operation on the first control, and displaying the first window corresponding to the audio processing service.

8. The method according to any one of claims 1 to 7, wherein the method further comprises:
when a communication connection is not established with the first electronic device, if detecting that the communication connection is established with the first electronic device, receiving a first synchronization instruction and second audio information that are sent by the first electronic device, wherein the second audio information is recorded after the first electronic device detects the first trigger operation; and
the first synchronization instruction instructs to store the second audio information in the storage area specified by the audio processing service; and
storing, according to the first synchronization instruction, the second audio information in the storage area specified by the audio processing service.

9. The method according to claim 8, wherein the method further comprises:
after receiving the first synchronization instruction and the second audio information that are sent by the first electronic device, during association with the third electronic device, generating and sending a second synchronization instruction and the second audio information to the third electronic device according to the first synchronization instruction, wherein the second synchronization instruction instructs to store the second audio information in a storage area specified by the audio processing service in the third electronic device.

10. The method according to any one of claims 1 to 9, wherein the method further comprises:
before receiving the at least one piece of first audio information, sending first notification information to the first electronic device, wherein the first notification information indicates that the audio processing service is capable of storing the first audio information.

11. An audio processing method, applied to a first electronic device, wherein the method comprises:
when a communication connection is established with at least one target electronic device, detecting a first trigger operation, and sending at least one piece of recorded first audio information to the target electronic device, so that the first audio information is displayed in a first window corresponding to an audio processing service, and the first audio information is shareable to at least one target application.

12. The method according to claim 11, wherein the at least one target electronic device comprises a second electronic device and a third electronic device; and the method further comprises:
receiving change processing information, sent by the second electronic device, of the first audio information; and
sending a change synchronization instruction to the third electronic device based on the change processing information of the first audio information, so that the third electronic device changes first audio information in an audio processing service according to the change synchronization instruction.

13. The method according to claim 11 or 12, wherein the method further comprises:
when a communication connection is not established with the target electronic device, detecting the first trigger operation, and obtaining second audio information; and
detecting that the communication connection is established with the target electronic device, and sending a first synchronization instruction and the recorded second audio information to the target electronic device, wherein the first synchronization instruction instructs the target electronic device to store the second audio information in a storage area specified by an audio processing service.

14. The method according to claim 13, wherein sending the first synchronization instruction and the second audio information to the target electronic device comprises:
detecting that a communication connection is established with a fourth electronic device, and when the target electronic device and the fourth electronic device are devices associated with each other, sending the first synchronization instruction and the second audio information to the target electronic device, so that the target electronic device synchronizes the second audio information to a storage area specified by an audio processing service in the fourth electronic device.

15. The method according to any one of claims 11 to 14, wherein the method further comprises:
after detecting the first trigger operation, sending a first instruction to the target electronic device, wherein the first instruction instructs the target electronic device to store the at least one piece of first audio information in the storage area specified by the audio processing service.

16. The method according to any one of claims 11 to 15, wherein the method further comprises:
receiving first notification information sent by the target electronic device, wherein the first notification information indicates that the audio processing service in the target electronic device is capable of storing the first audio information; and
outputting a voice prompt based on the first notification information, wherein the voice prompt indicates to start recording.

17. An interaction system, wherein the interaction system comprises a first electronic device and a second electronic device;
the first electronic device detects a first trigger operation, and sends at least one piece of recorded first audio information to the second electronic device;
the second electronic device receives the at least one piece of first audio information;
the second electronic device displays a first window corresponding to the audio processing service, wherein the first window comprises the at least one piece of first audio information; and
when displaying the first window on a target interface of at least one target application, the second electronic device detects an operation of dragging the first audio information in the first window to the target interface, and shares the first audio information to the at least one target application.

18. An electronic device, wherein the electronic device comprises a memory and one or more processors, the memory is coupled to the processor, the memory stores computer program code, the computer program code comprises computer instructions, and when the computer instructions are executed by the processor, the electronic device is caused to perform the audio processing method according to any one of claims 1 to 10 or the audio processing method according to any one of claims 11 to 16.

19. A computer-readable storage medium, wherein the computer-readable storage medium stores instructions, and when the instructions are run on a computer, the computer is caused to perform the audio processing method according to any one of claims 1 to 10 or the audio processing method according to any one of claims 11 to 16.
